# EUROPEAN PATENT APPLICATION

(11) **EP 4 770 173 A1**
(43) Date of publication of application: **01.07.2026**
(21) Application number: 24858138.1
(22) Date of filing: 22.07.2024
(51) Int. Cl.: H04W 24/02

(54) **INFORMATION TRANSMISSION METHOD, APPARATUS, AND DEVICE**

(30) Priority: 25.08.2023 CN 202311081695
(71) Applicant: Datang Mobile Communications Equipment Co., Ltd., Beijing 100085 (CN)
(72) Inventor: YAN, Xue, Beijing 100085 (CN); YAN, Nan, Beijing 100085 (CN)
(74) Representative: Maiwald GmbH
(86) International application number: PCT/CN2024/106705
(87) International publication number: WO 2025/044594

(57) **Abstract**

This disclosure provides an information transmission method, apparatus, and device. The information transmission method includes: in a case that a terminal is configured with first configuration information, obtaining first information, the first configuration information being conditional configuration information for subsequent cell addition and/or change, the first information being subsequent cell addition and/or change-related information; sending the first information to a network device; wherein the first information includes at least one of the following: subsequent cell addition and/or change information, or subsequent cell addition and/or change list information.

## Description

### CROSS-REFERENCE TO RELATED APPLICATION

This application claims priority to Chinese Patent Application No. 202311081695.6, filed with CNIPA on August 25, 2023, entitled "Information Transmission Method, Apparatus, and Device", disclosure of which is incorporated herein by reference in its entirety.

### TECHNICAL FIELD

This disclosure relates to the field of communication technology, and in particular to an information transmission method, apparatus, and device.

### BACKGROUND

For the current subsequent Conditional PSCell Addition/Change (CPAC), adding or deleting a candidate primary SCG cell (PSCell) results in a large amount of interface interaction and signaling overhead. In order to reduce interface interaction and signaling overhead, it is necessary to reduce the number of times candidate PSCells are added or deleted. This requires reasonable network configuration, but there is currently no solution that supports achieving this goal.

As a result, the relevant technologies cannot support solutions that reduce interface interaction and signaling overhead caused by subsequent cell addition and/or change.

### SUMMARY

This disclosure aims to provide an information transmission method, apparatus, and device to solve the problem that related technologies cannot support solutions that reduce interface interaction and signaling overhead caused by subsequent cell addition and/or change.

To address the aforementioned technical problems, an embodiment of this disclosure provides an information transmission method performed by a terminal, including:
in a case that the terminal is configured with first configuration information, obtaining first information, the first configuration information being conditional configuration information for subsequent cell addition and/or change, the first information being subsequent cell addition and/or change-related information; and
sending the first information to a network device;
wherein the first information includes at least one of the following:
   subsequent cell addition and/or change information; or
   subsequent cell addition and/or change list information.

In some embodiments, the subsequent cell addition and/or change information includes at least one of the following:
identification information of each candidate cell;
execution condition configuration information for each candidate cell or execution condition list configuration information for each candidate cell;
a number of times each candidate cell has been accessed;
a duration for which each candidate cell has been accessed;
information about an order in which candidate cells have been accessed;
first indication information for indicating that a first candidate cell is added or released;
first time or number-of-times information for indicating a time when a second candidate cell is added or released;
second indication information for indicating that an execution condition of a third candidate cell is updated;
second time or number-of-times information for indicating a time when an execution condition of a fourth candidate cell is updated;
information about updated execution condition; or
third time information for indicating a duration from when the first configuration information is received by the terminal to when the first configuration information is released.

In some embodiments, each entry in the subsequent cell addition and/or change list information includes at least one of the following:
identification information of a source cell;
identification information of a target cell;
a duration from when the source cell is accessed to when the target cell is accessed;
measurement result information of the source cell and/or the target cell;
measurement result information of each candidate cell;
identification information of each candidate cell;
execution condition configuration information for each candidate cell or execution condition list configuration information for each candidate cell;
third indication information for indicating that a fifth candidate cell is added or released;
fourth time or number-of-times information for indicating a time when a sixth candidate cell is added or released;
fourth indication information for indicating that an execution condition of a seventh candidate cell is updated;
fifth time or number-of-times information for indicating a time when an execution condition of an eighth candidate cell is updated; or
information about updated execution condition.

In some embodiments, the method further includes:
logging the first information in a target report;
wherein the target report includes: a terminal mobility history information report, other existing report than the terminal mobility history information report, or a newly added report.

In some embodiments, logging the first information in the target report includes:
logging the first information in the target report in a first manner;
wherein the first manner includes any one of the following:
   the first information is logged as a list including at least two entries, each entry corresponding to one serving cell;
   the first information is logged integrally as one entry.

In some embodiments, the method further includes:
receiving a first request message sent by the network device, wherein the first request message is used for requesting the terminal to report the first information;
the sending the first information to the network device includes:
   sending a first response message to the network device in response to the first request message, wherein the first response message carries the first information.

In some embodiments, before receiving the first request message sent by the network device, the method further includes:
sending fifth indication information to the network device, wherein the fifth indication information is used for notifying the network device that the terminal stores the first information.

An embodiment of this disclosure further provides an information transmission method, performed by a network device, including:
receiving first information sent by a terminal, wherein the first information being subsequent cell addition and/or change-related information;
wherein the first information includes at least one of the following:
   subsequent cell addition and/or change information; or
   subsequent cell addition and/or change list information.

In some embodiments, the subsequent cell addition and/or change information includes at least one of the following:
identification information of each candidate cell;
execution condition configuration information for each candidate cell or execution condition list configuration information for each candidate cell;
a number of times each candidate cell has been accessed;
a duration for which each candidate cell has been accessed;
information about an order in which candidate cells have been accessed;
first indication information for indicating that a first candidate cell is added or released;
first time or number-of-times information for indicating a time when a second candidate cell is added or released;
second indication information for indicating that an execution condition of a third candidate cell is updated;
second time or number-of-times information for indicating a time when an execution condition of a fourth candidate cell is updated;
information about updated execution condition; or
third time information for indicating a duration from when first configuration information is received by the terminal to when the first configuration information is released, wherein the first configuration information is conditional configuration information for subsequent cell addition and/or change.

In some embodiments, each entry in the subsequent cell addition and/or change list information includes at least one of the following:
identification information of a source cell;
identification information of a target cell;
a duration from when the source cell is accessed to when the target cell is accessed;
measurement result information of the source cell and/or the target cell;
measurement result information of each candidate cell;
identification information of each candidate cell;
execution condition configuration information for each candidate cell or execution condition list configuration information for each candidate cell;
third indication information for indicating that a fifth candidate cell is added or released;
fourth time or number-of-times information for indicating a time when a sixth candidate cell is added or released;
fourth indication information for indicating that an execution condition of a seventh candidate cell is updated;
fifth time or number-of-times information for indicating a time when an execution condition of an eighth candidate cell is updated; or
information about updated execution condition.

In some embodiments, the first information is carried in a target report;
wherein the target report includes: a terminal mobility history information report, other existing report than the terminal mobility history information report, or a newly added report.

In some embodiments, the first information is logged in the target report by the terminal using a first manner;
wherein the first manner includes any one of the following:
the first information is logged as a list including at least two entries, each entry corresponding to one serving cell;
the first information is logged integrally as one entry.

In some embodiments, the method further includes:
sending a first request message to the terminal, wherein the first request message is used for requesting the terminal to report the first information;
the receiving the first information sent by the terminal includes:
   receiving a first response message sent by the terminal in response to the first request message, wherein the first response message carries the first information.

In some embodiments, before sending the first request message to the terminal, the method further includes:
receiving fifth indication information sent by the terminal, wherein the fifth indication information is used for notifying the network device that the terminal stores the first information.

In some embodiments, the method further includes:
sending the first information to a target node via interface signaling.

An embodiment of this disclosure further provides an information transmission device, which is a terminal, including a memory, a transceiver, and a processor; the memory is used for storing a computer program; the transceiver is used for sending and receiving data under the control of the processor; and the processor is used for reading the computer program from the memory and performing the following steps:
in a case that the terminal is configured with first configuration information, obtaining first information, the first configuration information being conditional configuration information for subsequent cell addition and/or change, the first information being subsequent cell addition and/or change-related information; and
sending the first information to the network device via the transceiver;
wherein the first information includes at least one of the following:
   subsequent cell addition and/or change information; or
   subsequent cell addition and/or change list information.

In some embodiments, the subsequent cell addition and/or change information includes at least one of the following:
identification information of each candidate cell;
execution condition configuration information for each candidate cell or execution condition list configuration information for each candidate cell;
a number of times each candidate cell has been accessed;
a duration for which each candidate cell has been accessed;
information about an order in which candidate cells have been accessed;
first indication information for indicating that a first candidate cell is added or released;
first time or number-of-times information for indicating a time when a second candidate cell is added or released;
second indication information for indicating that an execution condition of a third candidate cell is updated;
second time or number-of-times information for indicating a time when an execution condition of a fourth candidate cell is updated;
information about updated execution condition; or
third time information for indicating a duration from when the first configuration information is received by the terminal to when the first configuration information is released.

In some embodiments, each entry in the subsequent cell addition and/or change list information includes at least one of the following:
identification information of a source cell;
identification information of a target cell;
a duration from when the source cell is accessed to when the target cell is accessed;
measurement result information of the source cell and/or the target cell;
measurement result information of each candidate cell;
identification information of each candidate cell;
execution condition configuration information for each candidate cell or execution condition list configuration information for each candidate cell;
third indication information for indicating that a fifth candidate cell is added or released;
fourth time or number-of-times information for indicating a time when a sixth candidate cell is added or released;
fourth indication information for indicating that an execution condition of a seventh candidate cell is updated;
fifth time or number-of-times information for indicating a time when an execution condition of an eighth candidate cell is updated; or
information about updated execution condition.

In some embodiments, the steps further include:
logging the first information in a target report;
wherein the target report includes: a terminal mobility history information report, other existing report than the terminal mobility history information report, or a newly added report.

In some embodiments, logging the first information in the target report includes:
logging the first information in the target report in a first manner;
wherein the first manner includes any one of the following:
   the first information is logged as a list including at least two entries, each entry corresponding to one serving cell;
   the first information is logged integrally as one entry.

In some embodiments, the steps further include:
receiving, via the transceiver, a first request message sent by the network device, wherein the first request message is used for requesting the terminal to report the first information;
the sending the first information to the network device includes:
   sending a first response message to the network device in response to the first request message, wherein the first response message carries the first information.

In some embodiments, the steps further include:
before receiving the first request message sent by the network device, sending fifth indication information to the network device via the transceiver; the fifth indication information is used for notifying the network device that the terminal stores the first information.

An embodiment of this disclosure further provides an information transmission device, which is a network device, including a memory, a transceiver, and a processor;
the memory is used for storing a computer program; the transceiver is used for sending and receiving data under the control of the processor; and the processor is used for reading the computer program from the memory and performing the following step:
receiving, via the transceiver, first information sent by the terminal, the first information being subsequent cell addition and/or change-related information;
wherein the first information includes at least one of the following:
   subsequent cell addition and/or change information; or
   subsequent cell addition and/or change list information.

In some embodiments, the subsequent cell addition and/or change information includes at least one of the following:
identification information of each candidate cell;
execution condition configuration information for each candidate cell or execution condition list configuration information for each candidate cell;
each candidate cell was accessed;
a duration for which each candidate cell has been accessed;
information about an order in which candidate cells have been accessed;
first indication information for indicating that a first candidate cell is added or released;
first time or number-of-times information for indicating a time when a second candidate cell is added or released;
second indication information for indicating that an execution condition of a third candidate cell is updated;
second time or number-of-times information for indicating a time when an execution condition of a fourth candidate cell is updated;
information about updated execution condition; or
third time information for indicating a duration from when first configuration information is received by the terminal to when the first configuration information is released, wherein the first configuration information is conditional configuration information for subsequent cell addition and/or change.

In some embodiments, each entry in the subsequent cell addition and/or change list information includes at least one of the following:
identification information of a source cell;
identification information of a target cell;
a duration from when the source cell is accessed to when the target cell is accessed;
measurement result information of the source cell and/or the target cell;
measurement result information of each candidate cell;
identification information of each candidate cell;
execution condition configuration information for each candidate cell or execution condition list configuration information for each candidate cell;
third indication information for indicating that a fifth candidate cell is added or released;
fourth time or number-of-times information for indicating a time when a sixth candidate cell is added or released;
fourth indication information for indicating that an execution condition of a seventh candidate cell is updated;
fifth time or number-of-times information for indicating a time when an execution condition of an eighth candidate cell is updated; or
information about updated execution condition.

In some embodiments, the first information is carried in a target report;
wherein the target report includes: a terminal mobility history information report, other existing report than the terminal mobility history information report, or a newly added report.

In some embodiments, the first information is logged in the target report by the terminal using a first manner;
wherein the first manner includes any one of the following:
the first information is logged as a list including at least two entries, each entry corresponding to one serving cell;
the first information is logged integrally as one entry.

In some embodiments, the step further includes:
sending a first request message to the terminal via the transceiver, wherein the first request message is used for requesting the terminal to report the first information;
the receiving the first information sent by the terminal includes:
   receiving a first response message sent by the terminal in response to the first request message, wherein the first response message carries the first information.

In some embodiments, the step further includes:
before sending the first request message to the terminal, receiving, via the transceiver, fifth indication information sent by the terminal, wherein the fifth indication information is used for notifying the network device that the terminal stores the first information.

In some embodiments, the step further includes:
sending the first information to a target node via interface signaling by using the transceiver.

An embodiment of this disclosure further provides an information transmission apparatus applied to a terminal, including:
a first obtaining unit, configured to obtain first information in a case that the terminal is configured with first configuration information, the first configuration information being conditional configuration information for subsequent cell addition and/or change, the first information being subsequent cell addition and/or change-related information; and
a first sending unit, configured to send the first information to a network device;
wherein the first information includes at least one of the following:
   subsequent cell addition and/or change information; or
   subsequent cell addition and/or change list information.

In some embodiments, the subsequent cell addition and/or change information includes at least one of the following:
identification information of each candidate cell;
execution condition configuration information for each candidate cell or execution condition list configuration information for each candidate cell;
a number of times each candidate cell has been accessed;
a duration for which each candidate cell has been accessed;
information about an order in which candidate cells have been accessed;
first indication information for indicating that a first candidate cell is added or released;
first time or number-of-times information for indicating a time when a second candidate cell is added or released;
second indication information for indicating that an execution condition of a third candidate cell is updated;
second time or number-of-times information for indicating a time when an execution condition of a fourth candidate cell is updated;
information about updated execution condition; or
third time information for indicating a duration from when the first configuration information is received by the terminal to when the first configuration information is released.

In some embodiments, each entry in the subsequent cell addition and/or change list information includes at least one of the following:
identification information of a source cell;
identification information of a target cell;
a duration from when the source cell is accessed to when the target cell is accessed;
measurement result information of the source cell and/or the target cell;
measurement result information of each candidate cell;
identification information of each candidate cell;
execution condition configuration information for each candidate cell or execution condition list configuration information for each candidate cell;
third indication information for indicating that a fifth candidate cell is added or released;
fourth time or number-of-times information for indicating a time when a sixth candidate cell is added or released;
fourth indication information for indicating that an execution condition of a seventh candidate cell is updated;
fifth time or number-of-times information for indicating a time when an execution condition of an eighth candidate cell is updated; or
information about updated execution condition.

In some embodiments, the apparatus further includes:
a first processing unit, configured to log the first information in a target report;
wherein the target report includes: a terminal mobility history information report, other existing report than the terminal mobility history information report, or a newly added report.

In some embodiments, logging the first information in the target report includes:
logging the first information in the target report in a first manner;
wherein the first manner includes any one of the following:
   the first information is logged as a list including at least two entries, each entry corresponding to one serving cell;
   the first information is logged integrally as one entry.

In some embodiments, the apparatus further includes:
a first receiving unit, configured to receive a first request message sent by the network device, wherein the first request message is used for requesting the terminal to report the first information;
the sending the first information to the network device includes:
   sending a first response message to the network device in response to the first request message, wherein the first response message carries the first information.

In some embodiments, the apparatus further includes:
a second sending unit, configured to send fifth indication information to the network device before receiving the first request message sent by the network device; the fifth indication information is used for notifying the network device that the terminal stores the first information.

An embodiment of this disclosure further provides an information transmission apparatus applied to a network device, including:
a second receiving unit, configured to receive first information sent by a terminal, wherein the first information is subsequent cell addition and/or change-related information;
wherein the first information includes at least one of the following:
   subsequent cell addition and/or change information; or
   subsequent cell addition and/or change list information.

In some embodiments, the subsequent cell addition and/or change information includes at least one of the following:
identification information of each candidate cell;
execution condition configuration information for each candidate cell or execution condition list configuration information for each candidate cell;
a number of times each candidate cell has been accessed;
a duration for which each candidate cell has been accessed;
information about an order in which candidate cells have been accessed;
first indication information for indicating that a first candidate cell is added or released;
first time or number-of-times information for indicating a time when a second candidate cell is added or released;
second indication information for indicating that an execution condition of a third candidate cell is updated;
second time or number-of-times information for indicating a time when an execution condition of a fourth candidate cell is updated;
information about updated execution condition; or
third time information for indicating a duration from when first configuration information is received by the terminal to when the first configuration information is released, wherein the first configuration information is conditional configuration information for subsequent cell addition and/or change.

In some embodiments, each entry in the subsequent cell addition and/or change list information includes at least one of the following:
identification information of a source cell;
identification information of a target cell;
a duration from when the source cell is accessed to when the target cell is accessed;
measurement result information of the source cell and/or the target cell;
measurement result information of each candidate cell;
identification information of each candidate cell;
execution condition configuration information for each candidate cell or execution condition list configuration information for each candidate cell;
third indication information for indicating that a fifth candidate cell is added or released;
fourth time or number-of-times information for indicating a time when a sixth candidate cell is added or released;
fourth indication information for indicating that an execution condition of a seventh candidate cell is updated;
fifth time or number-of-times information for indicating a time when an execution condition of an eighth candidate cell is updated; or
information about updated execution condition.

In some embodiments, the first information is carried in a target report;
wherein the target report includes: a terminal mobility history information report, other existing report than the terminal mobility history information report, or a newly added report.

In some embodiments, the first information is logged in the target report by the terminal using a first manner;
wherein the first manner includes any one of the following:
the first information is logged as a list including at least two entries, each entry corresponding to one serving cell;
the first information is logged integrally as one entry.

In some embodiments, the apparatus further includes:
a third sending unit, configured to send a first request message to the terminal, wherein the first request message is used for requesting the terminal to report the first information;
the receiving the first information sent by the terminal includes:
   receiving a first response message sent by the terminal in response to the first request message, wherein the first response message carries the first information.

In some embodiments, the apparatus further includes:
a third receiving unit, configured to receive fifth indication information sent by the terminal before sending the first request message to the terminal; the fifth indication information is used for notifying the network device that the terminal stores the first information.

In some embodiments, the apparatus further includes:
a fourth sending unit, configured to send the first information to a target node via interface signaling.

An embodiment of this disclosure further provides a non-transitory readable storage medium storing a computer program for causing a processor to execute the foregoing methods on the terminal side or on the network device side.

Beneficial effects of the disclosed technical solution are as follows.

According to the information transmission method, first information is obtained in a case that a terminal is configured with first configuration information, the first configuration information being conditional configuration information for subsequent cell addition and/or change, the first information being subsequent cell addition and/or change-related information; and the first information is sent to the network device; wherein the first information includes at least one of the following: subsequent cell addition and/or change information, or subsequent cell addition and/or change list information; configuration optimization on the network side based on the first information can be supported, thereby reducing the number of times the first configuration information is updated, and thus supporting the reduction of interface interaction and signaling overhead caused by the update of the first configuration information, which effectively solves the problem that related technologies cannot support solutions that reduce interface interaction and signaling overhead caused by subsequent cell addition and/or change.

### BRIEF DESCRIPTION OF THE DRAWINGS

Fig. 1 is a schematic diagram of the architecture of a wireless communication system according to an embodiment of this disclosure;
Fig. 2 is a schematic flowchart of an information transmission method according to an embodiment of this disclosure;
Fig. 3 is another schematic flowchart of an information transmission method according to an embodiment of this disclosure;
Fig. 4 is a schematic diagram of PSCell add and/or change according to an embodiment of this disclosure;
Fig. 5 is a structural diagram of an information transmission device according to an embodiment of this disclosure;
Fig. 6 is another structural diagram of an information transmission device according to an embodiment of this disclosure;
Fig. 7 is a structural diagram of an information transmission apparatus according to an embodiment of this disclosure;
Fig. 8 is another structural diagram of an information transmission apparatus according to an embodiment of this disclosure.

### DETAILED DESCRIPTION

The technical solution of the embodiments of this disclosure will be clearly and thoroughly described below with reference to the accompanying drawings. Obviously, the described embodiments are only some embodiments of this disclosure, and not all embodiments. Based on the embodiments of this disclosure, all other embodiments obtained by those of ordinary skill in the art without creative effort are within the scope of this disclosure.

In embodiments of this disclosure, the term "and/or" describes the relationship between related objects, indicating that three relationships can exist. For example, A and/or B can represent three cases: A alone, A and B simultaneously, and B alone. The character "/" generally indicates that the preceding and following related objects have an "or" relationship.

In embodiments of this disclosure, the term "multiple" refers to two or more, and other quantifiers are similar.

It is noted, the technical solutions provided in the embodiments of this disclosure are applicable to various systems, particularly 5th-Generation (5G) systems. Applicable systems include Global System for Mobile Communication (GSM) system, Code Division Multiple Access (CDMA) system, Wideband Code Division Multiple Access (WCDMA) system, General Packet Radio Service (GPRS) system, Long Term Evolution (LTE) system, LTE Frequency Division Duplex (FDD) system, LTE Time Division Duplex (TDD) system, Long Term Evolution Advanced (LTE-A) system, Universal Mobile Telecommunications System (UMTS) system, Worldwide Interoperability for Microwave Access (WiMAX) system, 5G New Radio (NR) system, and the like. All of these systems include a terminal device and a network device. The system may also include a core network component, such as an evolved packet system (EPS) or a 5G system (5GS).

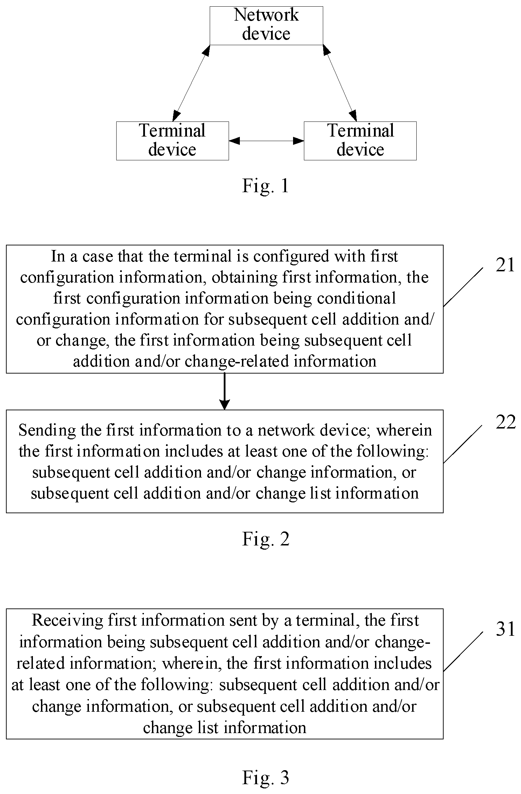

Fig. 1 shows a block diagram of a wireless communication system to which embodiments of this disclosure are applicable. The wireless communication system includes a terminal device (also abbreviated as terminal) and a network device.

The terminal device involved in the embodiments of this disclosure can be devices that provide voice and/or data connectivity to users, handheld devices with wireless connectivity, or other processing devices connected to a wireless modem. The names of the terminal devices may differ in different systems; for example, in a 5G system, a terminal device can be called User Equipment (UE). Wireless terminal devices can communicate with one or more core networks (CNs) via a Radio Access Network (RAN). Wireless terminal devices can be mobile terminal devices, such as mobile phones (or "cellular" phones) and computers with mobile terminal devices, for example, portable, pocket-sized, handheld, computer-embedded, or vehicle-mounted mobile devices that exchange voice and/or data with the RAN. Examples include Personal Communication Service (PCS) phones, cordless phones, Session Initiated Protocol (SIP) phones, Wireless Local Loop (WLL) stations, and Personal Digital Assistants (PDAs). Wireless terminal device can also be referred to as a system, subscriber unit, subscriber station, mobile station, mobile, remote station, access point, remote terminal, access terminal, user terminal, user agent, or user device, but this is not limited in the embodiments of this disclosure.

The network device involved in the embodiments of this disclosure can be a base station, which may include multiple cells providing services to terminals. Depending on the specific application, the base station may also be called an access point, or a device in the access network that communicates with the wireless terminal device through one or more sectors on the air interface, or other names. The network device can be used to exchange received air frames with Internet Protocol (IP) packets, acting as a router between the wireless terminal device and the rest of the access network, where the rest of the access network may include an Internet Protocol (IP) communication network. The network device can also coordinate the attribute management of the air interface. For example, the network device involved in this disclosure can be a base transceiver station (BTS) in a Global System for Mobile communications (GSM) or Code Division Multiple Access (CDMA) system, a NodeB in a Wide-band Code Division Multiple Access (WCDMA) system, an evolved Node B (eNB or e-NodeB) in a long-term evolution (LTE) system, a 5G base station (gNB) in a next-generation 5G network architecture, a Home evolved Node B (HeNB), a relay node, a femto, a pico, etc., and is not limited in this disclosure. In some network structures, the network device may include a centralized unit (CU) node and a distributed unit (DU) node, and the centralized unit and distributed unit may be geographically separated.

Network device and terminal device can each use one or more antennas for Multiple Input Multiple Output (MIMO) transmission. MIMO transmission can be Single User MIMO (SU-MIMO) or Multiple User MIMO (MU-MIMO). Depending on the configuration and number of antenna combinations, MIMO transmission can be 2D MIMO, 3D MIMO, Full Dimension MIMO (FD-MIMO), or Massive MIMO, and can also be diversity transmission, pre-coded transmission, or beamforming transmission, etc.

The following is an introduction of technical content related to the solutions provided in the embodiments of this disclosure.

Regarding subsequent CPAC.

In Release R17, CPAC was discussed, which involves pre-configuring multiple candidate PSCell configuration information to the UE and setting corresponding execution conditions for each candidate PSCell. When the UE receives the CPAC configuration information, the UE begins evaluating the CPAC execution conditions. If the UE comes to the conclusion that an execution condition is met, the UE performs a PSCell change to access the candidate target PSCell that meets the execution condition. After the UE successfully performs the PSCell change and accesses the candidate target cell, the UE will release the stored CPAC configuration information.

In some embodiments, in release R18, considering that according to R17 CPAC, each time PSCell change is executed, the CPAC configuration will be deleted, and if the network wants the UE to continue executing CPAC, the network needs to reconfigure and reinitialize the CPAC process, air interface signaling overhead and latency will be increased. Therefore, release R18 supports subsequent CPAC, which means that after the UE successfully executes CPAC, the UE does not release the CPAC configuration, but continues to evaluate the CPAC execution conditions and perform subsequent CPAC.

Specifically, subsequent CPAC is discussed in R18: subsequent CPAC now allows the UE to continue to execute subsequent CPACs without deleting the stored CPAC configuration after a successful CPAC execution. For the case that a secondary node (SN) initiates subsequent CPAC and A3 and/or A5 event is supported, a source SN generates an initial execution condition configuration, and subsequent execution condition configurations are generated by candidate SNs. However, since the source secondary cell group (SCG) may change, when configuring execution conditions for a candidate PSCell, it is necessary to consider the execution condition configuration for each candidate PSCell which acts as a serving PSCell. That is, an execution condition will be configured for each candidate PSCell which acts as a serving PSCell. In other words, each candidate PSCell will be configured with a list of execution conditions. However, this means that whenever a candidate PSCell is added (or deleted), the candidate SN where the addition(or deletion) of the candidate PSCell takes places needs to generate (or release) the execution conditions for other candidate PSCells, and all other candidate SNs also need to generate (or release) the execution conditions for the addition (or deletion) of the candidate PSCell (for example, deleting PSCell 1 requires releasing the execution conditions for changing from PSCell 1 to other PSCells, as well as the execution conditions for changing from other PSCells to PSCell 1). This will cause a large amount of interface interaction and signaling overhead; that is, adding or deleting a candidate PSCell will cause a large amount of interface interaction and signaling overhead. For the subsequent CPAC initiated by the master node (MN), similar problems may occur.

A3 event means: neighbour becomes offset better than SpCell, that is, the neighboring cell's signal quality is better than that of a specific cell (SpCell) by a certain value; A5 event means: SpCell becomes worse than threshold1 and neighbor becomes better than threshold2, that is, SpCell's signal quality is worse than threshold1, and the neighboring cell's signal quality is better than threshold2.

Based on the above, embodiments of this disclosure provide an information transmission method, apparatus, and device to solve the problem that related technologies cannot support solutions for reducing interface interaction and signaling overhead caused by subsequent cell addition and/or change. The method, apparatus, and device are based on the same creative concept. Since the principles by which the method, apparatus, and device solve the problem are similar, for the implementation of one of them, references may be made to another of them, and repeated details will not be elaborated further.

An information transmission method provided in an embodiment of this disclosure, performed by a terminal, as shown in Fig. 2, includes:
Step 21: in a case that the terminal is configured with first configuration information, obtaining first information, the first configuration information being conditional configuration information for subsequent cell addition and/or change, the first information being subsequent cell addition and/or change-related information; and
Step 22: sending the first information to a network device; wherein the first information includes at least one of the following: subsequent cell addition and/or change information, or subsequent cell addition and/or change list information.

The expression "obtaining first information" may include the meaning of logging first information; or, in a case that a terminal is configured with first configuration information, obtaining first information may include: obtaining and logging first information in a case that the terminal is configured with first configuration information.

Specifically, the first information may be obtained by the terminal based on the execution of its own configuration; the first configuration information may be a subsequent CPAC configuration; the first information may be subsequent CPAC related information; "subsequent cell addition and/or change" may be subsequent primary SCG cell (PSCell) addition and/or change, but this disclosure is not limited thereto.

The "subsequent cell addition and/or change information" can be information jointly logged for all candidate cells (information logged at the granularity of the entire system); the "subsequent cell addition and/or change list information" can be information logged separately for each candidate cell (information logged at the granularity of a cell).

Additionally, the terminal may also be configured with sixth indication information, which instructs the terminal to obtain and report the first information. This sixth indication information may be included in the first configuration information; alternatively, the sixth indication information may not be included in the first configuration information, that is, the network sends the sixth indication information to the UE by using signaling different from the first configuration information, which is not limited here.

Furthermore, the network device that sends the first configuration information to the terminal can be the network device that receives the first information, or another network device. That is, the sending the first configuration information and the receiving the first information may not be the actions of the same network node. The first configuration information can be configured to the terminal by any node, and no limitation is made here.

According to the information transmission method provided in the embodiment of this disclosure, first information is obtained in a case that a terminal is configured with first configuration information, the first configuration information being conditional configuration information for subsequent cell addition and/or change, the first information being subsequent cell addition and/or change-related information; and the first information is sent to the network device; wherein the first information includes at least one of the following: subsequent cell addition and/or change information, or subsequent cell addition and/or change list information; configuration optimization on the network side based on the first information can be supported, thereby reducing the number of times the first configuration information is updated, and thus supporting the reduction of interface interaction and signaling overhead caused by the update of the first configuration information, effectively solving the problem that related technologies cannot support solutions that reduce interface interaction and signaling overhead caused by subsequent cell addition and/or change. Specifically, when the first configuration information is subsequent CPAC configuration and the first information is subsequent CPAC related information, this solution can achieve: subsequent CPAC related information is logged for the subsequent CPAC configuration optimization on the network side; thereby supporting the optimization of the subsequent CPAC configuration and avoiding multiple reconfigurations such as PSCell addition and/or release during the subsequent CPAC process, thus reducing interface interaction and signaling overhead.

In the embodiment of the disclosure, the subsequent cell addition and/or change information includes at least one of the following: identification information of each candidate cell; execution condition configuration information for each candidate cell or execution condition list configuration information for each candidate cell; a number of times each candidate cell has been accessed; a duration for which each candidate cell has been accessed; information about an order in which candidate cells have been accessed; first indication information for indicating that a first candidate cell is added or released; first time or number-of-times information for indicating a time when a second candidate cell is added or released; second indication information for indicating that an execution condition of a third candidate cell is updated; second time or number-of-times information for indicating a time when an execution condition of a fourth candidate cell is updated; information about updated execution condition; or third time information for indicating a duration from when the first configuration information is received by the terminal to when the first configuration information is released.

This allows for the determination of subsequent cell addition and/or change information. A candidate cell can be a candidate primary SCG cell, and the first to fourth candidate cells can be the same candidate cell or different candidate cells; this is not limited here.

Information of each entry in the subsequent cell addition and/or change list information includes at least one of the following: identification information of a source cell; identification information of a target cell; a duration from when the source cell is accessed to when the target cell is accessed; measurement result information of the source cell and/or the target cell; measurement result information of each candidate cell; identification information of each candidate cell; execution condition configuration information for each candidate cell or execution condition list configuration information for each candidate cell; third indication information for indicating that a fifth candidate cell is added or released; fourth time or number-of-times information for indicating a time when a sixth candidate cell is added or released; fourth indication information for indicating that an execution condition of a seventh candidate cell is updated; fifth time or number-of-times information for indicating a time when an execution condition of an eighth candidate cell is updated; or information about updated execution condition.

This allows for the determination of subsequent cell addition and/or change list information. The source cell can be a source primary SCG cell, the target cell can be a target primary SCG cell, and the candidate cell can be a candidate primary SCG cell. The fifth to eighth candidate cells can be the same candidate cell or different candidate cells; this is not limited here.

In some embodiments, the information transmission method further includes: logging the first information in a target report; wherein the target report includes: a terminal mobility history information report, other existing report than the terminal mobility history information report, or a newly added report.

This supports accurate transmission of the first information. The other existing report than the terminal mobility history information report may include one or more of the following: successful PSCell addition and/or change report (SPR), successful handover report (SHR), radio link failure (RLF) report, connection establishment failed (CEF) report, random access channel (RACH) report, and SCG failure information message (SCG Failure Information).

The logging the first information in the target report includes: logging the first information in the target report using a first manner; wherein the first manner includes any one of the following: logging the first information as a list including at least two entries, each entry corresponding to one serving cell; logging the first information integrally as one entry.

This allows for the logging of the first information in multiple ways.

In some embodiments, the information transmission method further includes: receiving a first request message sent by the network device, wherein the first request message is used for requesting the terminal to report the first information; sending the first information to the network device includes: sending a first response message to the network device in response to the first request message; the first response message carries the first information.

This allows for the reporting of the first information based on network requirements.

In some embodiments, before receiving the first request message sent by the network device, the method further includes: sending fifth indication information to the network device; the fifth indication information is used for notifying the network device that the terminal stores the first information.

This allows the terminal to trigger the network to obtain the first information. Correspondingly, receiving the first request message sent by the network device may include: receiving the first request message sent by the network device based on the fifth indication information. Specifically, in some embodiments, the fifth indication information may or may not be sent by the terminal, and the network does not necessarily have to send the first request message based on this indication information.

An embodiment of this disclosure further provides an information transmission method, performed by a network device, as shown in Fig. 3, including:
step 31: receiving first information sent by a terminal, the first information being subsequent cell addition and/or change-related information; wherein, the first information includes at least one of the following: subsequent cell addition and/or change information, or subsequent cell addition and/or change list information.

The first information may be obtained by the terminal based on the execution of its own configuration; the first information may be subsequent CPAC related information; "subsequent cell addition and/or change" may be subsequent primary SCG cell (PSCell) addition and/or change, but this disclosure is not limited thereto.

The "subsequent cell addition and/or change information" can be information jointly logged for all candidate cells (information logged at the granularity of the entire system); "subsequent cell addition and/or change list information" can be information logged separately for each candidate cell (information logged at the granularity of a cell).

In some embodiments, the information transmission method may further include: sending first configuration information to the terminal, wherein the first configuration information is conditional configuration information for subsequent cell addition and/or change; and/or sending sixth indication information to the terminal, wherein the sixth indication information is used for instructing the terminal to obtain and report the first information. The first configuration information may be a subsequent CPAC configuration. It should be noted that the first configuration information and/or the sixth indication information may be configured by the network device, or may not be configured by the network device, i.e., may be configured by other network device, and this disclosure is not limited thereto.

According to the information transmission method provided in the embodiment of this disclosure, first information sent by a terminal is received; the first information is subsequent cell addition and/or change-related information; wherein, the first information includes at least one of the following: subsequent cell addition and/or change information, or subsequent cell addition and/or change list information; configuration optimization on the network side based on the first information can be supported, thereby reducing the number of times the first configuration information is updated, and thus supporting the reduction of interface interaction and signaling overhead caused by the update of the first configuration information, effectively solving the problem that related technologies cannot support solutions that reduce interface interaction and signaling overhead caused by subsequent cell addition and/or change. Specifically, when the first configuration information is a subsequent CPAC configuration and the first information is subsequent CPAC related information, this solution can support the optimization of the Subsequent CPAC configuration based on the subsequent CPAC related information logged by the terminal, thereby supporting the optimization of subsequent CPAC configuration and avoiding multiple reconfigurations such as PSCell addition and/or release during the subsequent CPAC process, thus reducing interface interaction and signaling overhead.

In an embodiment of this disclosure, the subsequent cell addition and/or change information includes at least one of the following: identification information of each candidate cell; execution condition configuration information for each candidate cell or execution condition list configuration information for each candidate cell; a number of times each candidate cell has been accessed; a duration for which each candidate cell has been accessed; information about an order in which candidate cells have been accessed; first indication information for indicating that a first candidate cell is added or released; first time or number-of-times information for indicating a time when a second candidate cell is added or released; second indication information for indicating that an execution condition of a third candidate cell is updated; second time or number-of-times information for indicating a time when an execution condition of a fourth candidate cell is updated; information about updated execution condition; or third time information for indicating a duration from when the first configuration information is received by the terminal to when the first configuration information is released, wherein the first configuration information is conditional configuration information for subsequent cell addition and/or change.

This allows for the determination of subsequent cell addition and/or change information. A candidate cell can be a candidate primary SCG cell, and the first to fourth candidate cells can be the same candidate cell or different candidate cells; this disclosure is not limited thereto.

Information of each entry in the subsequent cell addition and/or change list information includes at least one of the following: identification information of a source cell; identification information of a target cell; a duration from when the source cell is accessed to when the target cell is accessed; measurement result information of the source cell and/or the target cell; measurement result information of each candidate cell; identification information of each candidate cell; execution condition configuration information for each candidate cell or execution condition list configuration information for each candidate cell; third indication information for indicating that a fifth candidate cell is added or released; fourth time or number-of-times information for indicating a time when a sixth candidate cell is added or released; fourth indication information for indicating that an execution condition of a seventh candidate cell is updated; fifth time or number-of-times information for indicating a time when an execution condition of an eighth candidate cell is updated; or information about updated execution condition.

This allows for the determination of subsequent cell addition and/or change list information. The source cell can be a source primary SCG cell, the target cell can be a target primary SCG cell, and the candidate cell can be a candidate primary SCG cell. The fifth to eighth candidate cells can be the same candidate cell or different candidate cells; this disclosure is not limited thereto.

In some embodiments, the first information is carried in a target report; wherein the target report includes: a terminal mobility history information report, other existing report than the terminal mobility history information report, or a newly added report.

This supports accurate transmission of the first information. The other existing report than the terminal mobility history information report may include one or more of the following: successful PSCell addition and/or change report (SPR), successful handover report (SHR), radio link failure (RLF) report, connection establishment failed (CEF) report, random access channel (RACH) report, and SCG failure information message (SCG Failure Information).

The first information is logged in the target report by the terminal using a first manner; wherein, the first manner includes any one of the following: logging the first information as a list including at least two entries, each entry corresponding to one serving cell; logging the first information integrally as one entry.

This allows for the logging of the first information in multiple ways.

In some embodiments, the information transmission method further includes: sending a first request message to the terminal, wherein the first request message is used for requesting the terminal to report the first information; receiving the first information sent by the terminal includes: receiving a first response message sent by the terminal in response to the first request message; the first response message carries the first information.

This allows for the reporting of the first information based on network requirements.

In some embodiments, before sending the first request message to the terminal, the method further includes: receiving fifth indication information sent by the terminal; the fifth indication information is used for notifying the network device that the terminal stores the first information.

This allows the terminal to trigger the network to obtain the first information. Correspondingly, sending the first request message to the terminal includes: sending the first request message to the terminal according to the fifth indication information. Specifically, in some embodiments, the network does not necessarily send the first request message according to the fifth indication information.

In an embodiment of this disclosure, the information transmission method further includes: sending the first information to a target node via interface signaling.

This allows for the optimization of the first configuration information using the target node. Specifically, the receiving node (i.e., the network device) can optimize the first configuration information based on the first information, or the receiving node can send the first information to other node (i.e., the target node) via interface signaling, allowing the other node to optimize the first configuration information based on the first information; this disclosure is not limited thereto. Furthermore, the target node may include, but is not limited to: the network node that configures the first configuration information for the terminal (e.g., the MN node), candidate target nodes (e.g., candidate target SN nodes), and the source node (e.g., the source SN node) when the first configuration information is configured for the terminal.

The information transmission method provided in the embodiments of this disclosure is described hereinafter by way of example. The subsequent cell addition and/or change is for example a subsequent CPAC, and the candidate cell is for example a candidate PSCell.

To address the aforementioned technical problems, an embodiment of this disclosure provides an information transmission method, which can specifically be implemented as a condition configuration optimization method. The method mainly involves: when the UE is configured with subsequent CPAC, the UE logs the subsequent CPAC related information (corresponding to the first information mentioned above) and reports it to the network for network optimization of the subsequent CPAC configuration; this corresponds to the aforementioned obtaining the first information in a case that the terminal is configured with the first configuration information, the first configuration information being conditional configuration information for subsequent cell addition and/or change, the first information being subsequent cell addition and/or change-related information; and the UE sends the first information to the network device. Specifically, this solution may include the following.
(1) The network sends a subsequent CPAC configuration (corresponding to the first configuration information mentioned above) to the UE, the UE receives the subsequent CPAC configuration sent by the network, the UE logs subsequent CPAC related information and reports it to the network for network optimization of subsequent CPAC configuration.
(2) Based on (1), the network configures one or more of the following information to the UE:
   subsequent CPAC configuration;
   one piece of indication information (corresponding to the sixth indication information) for instructing the UE to log and report the subsequent CPAC related information.
(3) Based on (1), the UE logs one or more of the following subsequent CPAC related information:
   subsequent CPAC information (corresponding to the above-mentioned subsequent cell addition and/or change information);
   subsequent CPAC list information (corresponding to the above-mentioned subsequent cell addition and/or change list information).
(4) Based on (3), subsequent CPAC information includes one or more of the following:
   identification information of each candidate PSCell (corresponding to the identification information of each candidate cell mentioned above);
   execution condition configuration information or execution condition list configuration information for each candidate PSCell (corresponding to the execution condition configuration information for each candidate cell or execution condition list configuration information for each candidate cell mentioned above);
   a number of times each candidate PSCell has been accessed (corresponding to the number of times each candidate cell has been accessed mentioned above);
   a duration for which each candidate PSCell has been accessed (corresponding to the duration for which each candidate cell has been accessed mentioned above);
   information about an order in which candidate PSCells have been accessed (corresponding to the information about an order in which candidate cells have been accessed);
   indication information for indicating that a candidate PSCell is added or released (corresponding to the first indication information for indicating that the first candidate cell is added or released);
   time or number-of-times information for indicating the time when a candidate PSCell is added or released (corresponding to the first time or number-of-times information for indicating the time when a second candidate cell is added or released);
   indication information for indicating that an execution condition of a candidate PSCell is updated (corresponding to the second indication information for indicating that an execution condition of a third candidate cell is updated);
   time or number information for indicating a time when an execution condition of a candidate PSCell is updated (corresponding to the second time or number-of-times information for indicating a time when an execution condition of a fourth candidate cell is updated);
   information about updated execution condition (corresponding to the information about updated execution condition mentioned above);
   a duration from when the subsequent CPAC configuration is received to when the subsequent CPAC configuration is released (corresponding to the third time information for indicating a duration from when the first configuration information is received by the terminal to when the first configuration information is released).
(5) Based on (3), information of each entry in the subsequent CPAC list includes one or more of the following information:
   identification information of a source PSCell (corresponding to the identification information of the source cell mentioned above);
   identification information of a target PSCell (corresponding to the identification information of the target cell mentioned above);
   a duration from when the source PSCell is accessed to when the target PSCell is accessed (i.e., the duration for which the UE stays in the source PSCell; corresponding to the duration from when the source cell is accessed to when the target cell is accessed mentioned above);
   measurement result information of the source PSCell and/or target PSCell (corresponding to the measurement result information of the source cell and/or target cell mentioned above); wherein, this measurement result information may be the latest measurement result information at the time of PSCell addition or PSCell change, or the latest measurement result information before PSCell addition or PSCell change, or the latest measurement result information after PSCell addition or PSCell change; the measurement result information may include one or more of the following: reference signal received power (RSRP), reference signal received quality (RSRQ), signal to interference plus noise ratio (SINR);
   measurement result information of each candidate PSCell (corresponding to the measurement result information of each candidate cell mentioned above); wherein the measurement result information may be the latest measurement result information at the time of PSCell addition or PSCell change, or the latest measurement result information before PSCell addition or PSCell change, or the latest measurement result information after PSCell addition or PSCell change; the measurement result information may include one or more of the following: reference signal received power (RSRP), reference signal received quality (RSRQ), signal to interference plus noise ratio (SINR);
   identification information of each candidate PSCell (including the identification information of added or released candidate PSCell) which corresponds to the identification information of each candidate cell mentioned above;
   execution condition configuration information or execution condition list configuration information for each candidate PSCell (including the execution condition configuration information for added or released candidate PSCell) which corresponds to the execution condition configuration information for each candidate cell or execution condition list configuration information for each candidate cell mentioned above;
   indication information for indicating that a candidate PSCell is added or released (corresponding to the third indication information for indicating that the fifth candidate cell is added or released);
   time or number-of-times information for indicating a time when a candidate PSCell is added or released (corresponding to the fourth time or number-of-times information for indicating a time when a sixth candidate cell is added or released);
   indication information for indicating that an execution condition of a candidate PSCell is updated (corresponding to the fourth indication information for indicating that an execution condition of a seventh candidate cell is updated);
   time or number-of-times information for indicating a time when an execution condition of a candidate PSCell is updated (corresponding to the fifth time or number-of-times information for indicating a time when an execution condition of an eighth candidate cell is updated);
   information about updated execution condition (corresponding to the information about updated execution condition mentioned above).
(6) Based on (1), the UE logs the subsequent CPAC related information in the UE mobility history information report or other existing or new report (corresponding to the logging the first information in the target report; wherein the target report includes: the terminal mobility history information report, other existing report than the terminal mobility history information report, or a newly added report).
(7) Based on (6), logging by the UE the subsequent CPAC related information in the UE mobility history information report includes logging by the UE the subsequent CPAC as a list of multiple entries, each entry corresponding to one serving PSCell (corresponding to the above-mentioned first manner: logging the first information in the target report, wherein the first manner includes: logging the first information as a list including at least two entries, each entry corresponding to one serving cell).
(8) Based on (6), logging by the UE the subsequent CPAC related information in other existing or new report (corresponding to logging the first information in the target report in the first manner) includes one or more of the following:
   the UE logs the subsequent CPAC integrally as one entry (corresponding to the above-mentioned logging the first information integrally as one entry);
   the UE logs the subsequent CPAC as a list of multiple entries, and each entry corresponds to one serving PSCell (corresponding to the above-mentioned logging the first information as a list including at least two entries, and each entry corresponds to one serving cell).
(9) Based on (1), when the UE stores the subsequent CPAC, the UE sends an availability indication (corresponding to the fifth indication information above) to the network to notify the network that the UE side stores the subsequent CPAC related information; this corresponds to the above-mentioned sending the fifth indication information to the network device, wherein the fifth indication information is used for notifying the network device that the terminal stores the first information;
(10) Based on (1), when the network receives the availability indication information sent by the UE, the network sends a UE information request message (corresponding to the first request message mentioned above) to the UE to request the UE to report the subsequent CPAC related information; the UE sends the subsequent CPAC related information to the network through a UE information response message (corresponding to the first response message mentioned above); this corresponds to the sending by the network device the first request message to the terminal, wherein the first request message is used for requesting the terminal to report the first information, and sending, by the terminal, a first response message to the network device in response to the first request message, wherein the first response message carries the first information.
(11) Based on (1), after the network receives the subsequent CPAC related information sent by the UE, the network forwards it to a relevant node through interface signaling (corresponding to the above-mentioned sending the first information to the target node through interface signaling) for performing subsequent CPAC configuration optimization.

It is noted that, there is no reporting of the foregoing information currently because optimization corresponding to subsequent CPAC has not yet been considered. Without the reporting of such information, the network cannot optimize subsequent CPAC based on statistics information of UE, resulting in significant interface interactions and signaling overhead. In addition, the network can log the foregoing information and perform corresponding optimizations; this disclosure is not limited thereto.

The following provides specific examples illustrating this solution.

Example 1: The UE logs and reports subsequent CPAC related information.

Step 1: The network has configured the following information for the UE:
(1) subsequent CPAC configuration;
(2) (In some embodiments) a piece of indication information for instructing the UE to log and report subsequent CPAC related information.

Step 2: After receiving the configuration information sent by the network, the UE performs an execution condition evaluation, and when the execution condition is met, executes the subsequent CPAC until subsequent CPAC configuration is released.

Step 3: During Step 2 or after Step 2, the UE logs one or more of the following information:
- identification information of each candidate PSCell; this identification information can be the Cell Global Identifier (CGI) or the Physical Cell Identifier (PCI) + frequency information; the identification information of each candidate PSCell can be the identification information of each initial candidate PSCell, or the identification information of each candidate PSCell in the final stage (e.g., when the subsequent CPAC configuration is released or when failure occurs), or the identification information of all candidate PSCells;
- execution condition configuration information or execution condition list configuration information for each candidate PSCell; the execution condition may be A3, A4 and/or A5 event threshold (i.e., A3 event threshold, A4 event threshold and/or A5 event threshold); the execution condition can be: the initial execution conditions for all candidate PSCells, or the final (updated) execution conditions for all candidate PSCells, where the final (updated) execution conditions are the execution conditions when the subsequent CPAC configuration is released or when a failure occurs; or the execution condition can be: the initial execution condition of each initial candidate PSCell, or the execution condition of the last candidate PSCell, where the last candidate PSCell is the candidate PSCell when the subsequent CPAC configuration is released or when a failure occurs; where, the A4 event refers to "neighbor becomes better than threshold", i.e., the neighboring cell is better than a threshold;
- a number of times each candidate PSCell has been accessed;
- a duration for which each candidate PSCell has been accessed; the duration is the total duration for which each candidate PSCell has been accessed;
- information about an order in which candidate PSCells have been accessed; the information can be a list, where each entry in the list is identification information of one candidate PSCell;
- indication information for indicating that a candidate PSCell is added or released;
- time or number-of-times information for indicating a time when a candidate PSCell is added or released; the time information can be an absolute time, or a relative time relative to the time when the subsequent CPAC configuration is received; the number-of-times information can indicate: after which PSCell change is a candidate PSCell added or deleted, after the subsequent CPAC configuration is received;
- indication information for indicating that an execution condition of a candidate PSCell is updated;
- time or number-of-times information for indicating a time when an execution condition of a candidate PSCell is updated; the time information can be an absolute time or a relative time relative to the time when the subsequent CPAC configuration is received; the number-of-times information can indicate: after which PSCell change is the execution condition of a candidate PSCell updated, after the subsequent CPAC configuration is received;
- updated execution condition information; the execution condition information can be information about the updated execution condition;
- a duration from when the subsequent CPAC configuration is received to when the subsequent CPAC configuration is released.

The UE can log the above information in an existing report or a new report.

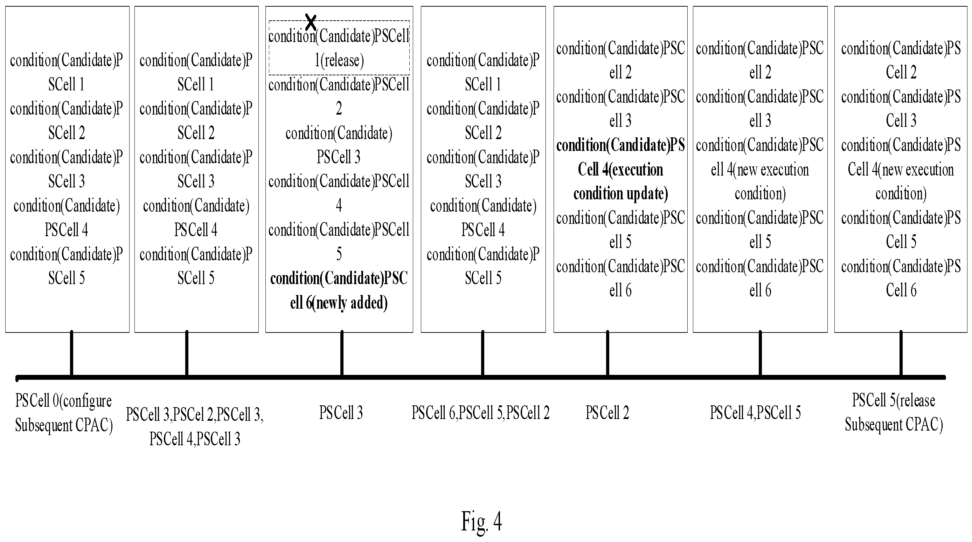

Based on the above, as shown in Fig. 4, for example: the UE is configured with 5 candidate PSCells, namely: PSCell 1 to PSCell 5; the UE's current serving PSCell is PSCell 0, and the UE 's access order is: PSCell 3, PSCell 2, PSCell 3, PSCell 4, PSCell 3; when the UE is in PSCell 3, the network configures the UE to add a PSCell 6 and release PSCell 1; subsequently, the UE sequentially accesses PSCell 6, PSCell 5, and PSCell 2; when the UE is in PSCell 2, the network indicates to reconfigure the execution condition of PSCell 4; subsequently, the UE sequentially accesses PSCell 4 and PSCell 5; when the UE is in PSCell 5, the network instructs the UE to release the subsequent CPAC, and the UE releases the subsequent CPAC configuration.

In the case shown in Fig. 4, the UE can log the following information:
- cell identification information (CGI, or PCI + frequency) of PSCell 1 to PSCell 5, for example, the identification information of each initial candidate PSCell;
- execution condition configuration information or execution condition list configuration information for PSCell 1 to PSCell 5, for example, the initial execution condition of each initial candidate PSCell;
- the number of times PSCell 1 has been accessed is 0, the number of times PSCell 2 has been accessed is 2, the number of times PSCell 3 has been accessed is 3, the number of times PSCell 4 has been accessed is 2, the number of times PSCell 5 has been accessed is 2, and the number of times PSCell 6 has been accessed is 1;
- the duration for which PSCell 1 to PSCell 6 have been accessed; this value = T3+T2+T3+T4+T3+T6+T5+T2+T4+T5, where Ti (i=1···6) is the duration for which the UE is in PSCell i; PSCell i may not be equal to PSCell i, that is, the duration for which the UE is in the same PSCell may vary from time to time;
- order of access (PSCell 3, PSCell 2, PSCell 3, PSCell 4, PSCell 3, PSCell 6, PSCell 5, PSCell 2, PSCell 4, PSCell 5);
- multiple entries, each entry containing one piece of information about adding or deleting a candidate PSCell or information about a change in the execution condition of a candidate PSCell. For example, the first entry includes: identification information of candidate PSCell 6, "add" indication information (i.e., indicating that a candidate cell is added at this time), information of an absolute or relative time when PSCell 6 is added, or that the PSCell 6 was added after the 5th PSCell change; the second entry includes: identification information of candidate PSCell 1, "release" indication information (i.e., indicating that a candidate cell is released at this time), information of an absolute or relative time when candidate PSCell 1 is released, or that the PSCell 1 was released after the 5th PSCell change; the third entry includes: identification information of candidate PSCell 4, "execution condition update" indication information (i.e., indicating that the execution condition information of a candidate cell is updated at this time), information of an absolute or relative time when the execution condition of PSCell 4 was updated, or that the execution condition of PSCell 4 was updated after the 8th PSCell change, and information about updated execution condition; the above-mentioned information related to addition, deletion or execution condition update can be in the same list or separate lists, which is not limited here;
- a duration from when the subsequent CPAC configuration is received to when the subsequent CPAC configuration is released.

Step 4: The UE sends availability indication information to the network, indicating that the UE stores the subsequent CPAC related information.

Step 5: The network receives the availability indication information sent by the UE; if the network wants the UE to report the subsequent CPAC related information, the network sends a UE information request message to the UE to request the UE to report subsequent CPAC related information.

Step 6: The UE receives the UE information request message sent by the network, and sends a UE information response message to the network to send the stored subsequent CPAC related information to the network.

Step 7: The network receives the subsequent CPAC related information sent by the UE and may forward the information to another network node via interface signaling for network optimization of subsequent CPAC configuration. The interface signaling can include Xn, X2, F1, E1 interface signaling, etc.

Specifically, regarding "optimization of subsequent CPAC configuration", for example, the network discovered during the process of analysis and optimization that during the subsequent CPAC process, PSCell 1 was deleted, PSCell 6 was added, and the execution condition of PSCell 4 was updated, while PSCell1 was never accessed during the entire subsequent CPAC process. Therefore, when the network configures subsequent CPAC for the UE next time, the network will configure PSCell 2 to PSCell 6 during the initial configuration, and will initially configure the execution condition of PSCell 4 as the updated execution condition. This avoids three reconfigurations in the subsequent CPAC process, reducing interface interactions and air interface signaling. The network can perform the analysis and optimization based on one or more sets of subsequent CPAC related information, and this disclosure is not limited in this regard.

Example 2: The UE logs and reports subsequent CPAC list information.

Step 1: The network has configured the following configuration information for the UE:
(1) subsequent CPAC configuration;
(2) (in some embodiments) a piece of indication information instructing the UE to log and report subsequent CPAC related information.

Step 2: After receiving the configuration information from the network, the UE performs an execution condition evaluation, and when the execution condition is met, executes the subsequent CPAC until the subsequent CPAC configuration is released.

Step 3: In step 2, each time the UE has executed a PSCell change, the UE logs one or more of the following information:
- identification information of a source PSCell; the identification information can be CGI, or PCI + frequency information;
- identification information of a target PSCell; the identification information can be CGI, or PCI + frequency information;
- a duration from when the source PSCell is accessed to when the target PSCell is accessed (i.e., the duration for which the UE stays in the source PSCell);
- measurement result information of the source PSCell and/or the target PSCell; the measurement result information may include cell-level measurement result information and/or beam-level measurement result information;
- measurement result information of each candidate PSCell; the measurement result information may include cell-level measurement result information and/or beam-level measurement result information;
   the above content can be based on the process of accessing the current PSCell (i.e., the PSCell currently serving the UE), and/or the process of changing from the current PSCell to another PSCell;
- identification information of each candidate PSCell; the identification information can be CGI or PCI + frequency information; the identification information of the candidate PSCell can be the identification information of each initial candidate PSCell when accessing the target candidate PSCell, or the identification information of each candidate PSCell at the end (e.g., when executing the next PSCell change or releasing the subsequent CPAC configuration or when failure occurs), or the identification information of all candidate PSCells;
- execution condition configuration information or execution condition list configuration information for each candidate PSCell; the execution condition may be A3, A4 and/or A5 event threshold; the execution condition can be: the initial execution conditions for all candidate PSCells, or the final (updated) execution conditions for all candidate PSCells, where the final (updated) execution conditions are the execution conditions when the next PSCell change is executed or the subsequent CPAC configuration is released or a failure occurs, or the execution condition can be: the initial execution condition of each initial candidate PSCell when accessing the target PSCell, or the execution condition of the last (e.g., when the next PSCell change is executed or the subsequent CPAC configuration is released or a failure occurs) candidate PSCell;
- indication information for indicating that a candidate PSCell is added or released;
- time or number-of-times information for indicating a time when a candidate PSCell is added or released; the time information can be an absolute time, or a relative time relative to a time when the current serving PSCell (source PSCell) is accessed;
- indication information for indicating that an execution condition of a candidate PSCell is updated;
- time or number-of-times information for indicating a time when an execution condition of a candidate PSCell is updated; the time information can be an absolute time, or a relative time relative to a time when the current serving PSCell (source PSCell) is accessed;
- updated execution condition information; the execution condition information can be information about the updated execution condition.

The UE can log the above information in the UE mobility history information, in an existing report, or in a new report.

Based on the above, for example, assume the UE is configured with 5 candidate PSCells, namely: PSCell 1 to PSCell 5; the UE's current serving PSCell is PSCell 0, and the UE 's access order is PSCell 3, PSCell 2, PSCell 3, PSCell 4, PSCell 3; when the UE is in PSCell 3, the network configures the UE to add a PSCell 6 and release PSCell 1; subsequently, the UE sequentially accesses PSCell 6, PSCell 5, and PSCell 2; when the UE is in PSCell 2, the network indicates to reconfigure the execution condition of PSCell 4; subsequently, the UE sequentially accesses PSCell 4 and PSCell 5; when the UE is in PSCell 5, the network instructs the UE to release the subsequent CPAC, and UE releases the subsequent CPAC configuration (see Fig. 4 for details). For this process, the UE can log information as follows.

A first entry (based on the process of accessing the current PSCell):
- source PSCell 0 identification information;
- target PSCell 3 identification information;
- duration for which the UE is in PSCell 0;
- measurement result information of PSCell 0;
- measurement result information of PSCell 3;
- measurement result information of PSCell 1, PSCell 2, PSCell 4 and PSCell 5;
- cell identification information (such as CGI, or PCI + frequency) of PSCell 1, PSCell 2, PSCell 4 and PSCell 5; for example, identification information of each initial candidate PSCell;
- execution condition configuration information or execution condition list configuration information for PSCell 1, PSCell 2, PSCell 4, and PSCell 5; for example, the initial execution condition of each initial candidate PSCell.

A second entry (based on the process of accessing the current PSCell):
- source PSCell 3 identification information;
- target PSCell 2 identification information;
- duration for which the UE is in PSCell 3;
- measurement result information of PSCell 3;
- measurement result information of PSCell 2;
- measurement result information of PSCell 1, PSCell 3, PSCell 4 and PSCell 5;
- cell identification information (such as CGI, or PCI + frequency) of PSCell 1, PSCell 3, PSCell 4 and PSCell 5; for example, the identification information of each initial candidate PSCell;
- execution condition configuration information or execution condition list configuration information for PSCell 1, PSCell 3, PSCell 4 and PSCell 5; for example, the initial execution condition of each initial candidate PSCell.

Third and fourth entries are similar to the first two entries, except that the source PSCell in the third entry is PSCell 2 and the target PSCell in the third entry is PSCell 3, the source PSCell in the fourth entry is PSCell 3 and the target PSCell in the fourth entry is PSCell 4; the details will not be elaborated here.

A fifth entry:
- source PSCell 4 identification information;
- target PSCell 3 identification information;
- duration for which the UE is in PSCell 4;
- measurement result information of PSCell 4;
- measurement result information of PSCell 3;
- measurement result information of PSCell 1, PSCell 2, PSCell 4 and PSCell 5;
- cell identification information (such as CGI, or PCI + frequency) of PSCell 1, PSCell 2, PSCell 4 and PSCell 5; for example, the identification information of each initial candidate PSCell;
- execution condition configuration information or execution condition list configuration information for PSCell 1, PSCell 2, PSCell 4, and PSCell 5; for example, initial execution condition of each initial candidate PSCell;
- multiple entries, each of which containing information about adding or deleting a candidate PSCell; for example, the first entry includes: identification information of candidate PSCell 6, "add" indication information (i.e., indicating that a candidate cell is added at this time), and information of an absolute or relative time when PSCell 6 is added; the second entry includes: identification information of candidate PSCell 1, "release" indication information (i.e., indicating that a candidate cell is released at this time), and information of an absolute or relative time when candidate PSCell 1 is released; the above-mentioned information related to addition or deletion can be in the same list or separate lists (the same applies if there is an execution condition update).

Sixth and seventh entries are similar to the first or second entries, except that the source PSCell in the sixth entry is PSCell 3 and the target PSCell in the sixth entry is PSCell 6, the source PSCell in the seventh entry is PSCell 6 and the target PSCell in the seventh entry is PSCell 5; the details will not be elaborated here.

An eighth entry:
- source PSCell 5 identification information;
- target PSCell 2 identification information;
- duration for which the UE is in PSCell 5;
- measurement result information of PSCell 5;
- measurement result information of PSCell 2;
- measurement result information of PSCell 1, PSCell 3, PSCell 4, PSCell 5 and PSCell 6;
- cell identification information (such as CGI, or PCI + frequency) of PSCell 1, PSCell 3, PSCell 4, PSCell 5 and PSCell 6; for example, identification information of each initial candidate PSCell;
- execution condition configuration information or execution condition list configuration information for PSCell 1, PSCell 3, PSCell 4, PSCell 5 and PSCell 6; for example, the initial execution condition of each initial candidate PSCell;
- one entry, which includes information about an execution condition update, specifically: identification information of candidate PSCell 4, "change execution condition" indication information (i.e., "execution condition update" indication information, indicating that execution condition information of a candidate cell is updated at this time), and information of an absolute or relative time when the execution condition is changed.

Subsequent entries (ninth and tenth entries) are similar to the entries mentioned above, except that the source PSCell in the ninth entry is PSCell 2 and the target PSCell in the ninth entry is PSCell 4, the source PSCell in the tenth entry is PSCell 4 and the target PSCell in the tenth entry is PSCell 5; the details will not be elaborated here.

Step 4: The UE sends availability indication information to the network, indicating that the UE stores the subsequent CPAC related information.

Step 5: The network receives the availability indication information sent by the UE; if the network wants the UE to report the subsequent CPAC related information, the network sends a UE information request message to the UE to request the UE to report subsequent CPAC related information.

Step 6: The UE receives the UE information request message sent by the network, and sends a UE information response message to the network to send the stored subsequent CPAC related information to the network.

Step 7: The network receives the subsequent CPAC related information sent by the UE, and may forward the information to another network node via interface signaling for network optimization of subsequent CPAC configuration. The interface signaling can include Xn, X2, F1, E1 interface signaling, etc.

Specifically, regarding "optimization of subsequent CPAC configuration", for example, the network discovered during the process of analysis and optimization that during the subsequent CPAC process, PSCell 1 was deleted, PSCell 6 was added, and the execution condition of PSCell 4 was updated, while PSCell 1 was never accessed during the entire subsequent CPAC process. Therefore, when the network configures subsequent CPAC for the UE next time, the network will configure PSCell 2 to PSCell 6 during the initial configuration, and will initially configure the execution condition of PSCell 4 as the updated execution condition. This avoids three reconfigurations during the subsequent CPAC process, reducing interface interactions and air interface signaling. The network can perform the analysis and optimization based on one or more sets of subsequent CPAC related information, and this disclosure is not limited in this regard.

Example 3: The UE logs and reports subsequent CPAC and subsequent CPAC list.

Based on examples 1 and 2, the UE can also simultaneously log subsequent CPAC (information) and subsequent CPAC list (information). For example, while logging the subsequent CPAC list, the UE can also log "duration from when the subsequent CPAC configuration is received to when the subsequent CPAC configuration is released" in the subsequent CPAC. Additionally, the UE can log information related to multiple subsequent CPACs. The information can be logged in a list, with each entry in the list logging information related to one subsequent CPAC.

Example 4: The network logs subsequent CPAC and/or subsequent CPAC list.

Network-side solution: the network can log the information logged by the UE in the above examples 1 to 3, and use the information to optimize the subsequent CPAC configuration. For details, please refer to the above passages, which will not be repeated here.

It should be noted that, for the details of one of the above examples, references can be made to another example of the above examples, and the repeated parts will not be described again.

Therefore, the solution provided by the embodiments of this disclosure can achieve the following: when the UE is configured with subsequent CPAC, the UE logs subsequent CPAC related information and reports the information to the network for network optimization of subsequent CPAC configuration, thereby reducing network reconfigurations during the subsequent CPAC process (i.e., avoiding multiple reconfigurations, such as PSCell addition or release, during the subsequent CPAC process), and reducing interface interaction and signaling overhead.

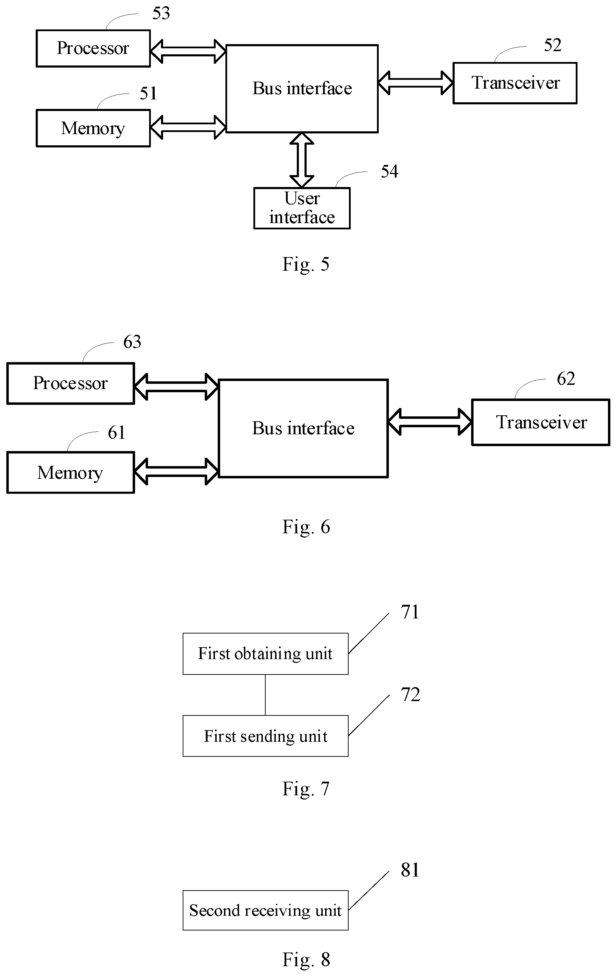

An embodiment of this disclosure further provides an information transmission device, which is a terminal, and as shown in Fig. 5, includes a memory 51, a transceiver 52, and a processor 53.

The memory 51 is used for storing a computer program; the transceiver 52 is used for sending and receiving data under the control of the processor 53; the processor 53 is used for reading the computer program in the memory 51 and performing the following steps:
in a case that the terminal is configured with first configuration information, obtaining first information, the first configuration information being conditional configuration information for subsequent cell addition and/or change, the first information being subsequent cell addition and/or change-related information; and
sending the first information to the network device via the transceiver 52; wherein the first information includes at least one of the following: subsequent cell addition and/or change information, or subsequent cell addition and/or change list information.

According to the information transmission device provided in the embodiment of this disclosure, first information is obtained in a case that a terminal is configured with first configuration information, the first configuration information being conditional configuration information for subsequent cell addition and/or change, the first information being subsequent cell addition and/or change-related information; and the first information is sent to the network device; wherein the first information includes at least one of the following: subsequent cell addition and/or change information, or subsequent cell addition and/or change list information; configuration optimization on the network side based on the first information can be supported, thereby reducing the number of times the first configuration information is updated, and thus supporting the reduction of interface interaction and signaling overhead caused by the update of the first configuration information, which effectively solves the problem that related technologies cannot support solutions that reduce interface interaction and signaling overhead caused by subsequent cell addition and/or change.

Specifically, the transceiver 52 is used for receiving and sending data under the control of the processor 53.

In Fig. 5, the bus architecture can include any number of interconnected buses and bridges, specifically linking various circuits of one or more processors represented by processor 53 and memory represented by memory 51. The bus architecture can also link various other circuits such as peripheral devices, voltage regulators, and power management circuits, which are well known in the art and therefore will not be described further herein. The bus interface provides an interface. Transceiver 52 can be multiple components, including a transmitter and a receiver, providing a unit for communicating with various other devices over a transmission medium, including wireless channels, wired channels, optical fibers, etc. For different user equipment, user interface 54 can also be an interface capable of connecting external or internal devices, including but not limited to keypads, displays, speakers, microphones, joysticks, etc.

The processor 53 is responsible for managing the bus architecture and general processing, while the memory 51 can store the data used by the processor 53 when performing operations.

In some embodiments, the processor 53 may be a central processing unit (CPU), an application-specific integrated circuit (ASIC), a field-programmable gate array (FPGA), or a complex programmable logic device (CPLD), and the processor may also adopt a multi-core architecture.

By invoking a computer program stored in memory, the processor executes any of the methods described in the embodiments of this disclosure according to the obtained executable instructions. The processor and memory may also be physically separated.

In an embodiment of this disclosure, the subsequent cell addition and/or change information includes at least one of the following: identification information of each candidate cell; execution condition configuration information for each candidate cell or execution condition list configuration information for each candidate cell; a number of times each candidate cell has been accessed; a duration for which each candidate cell has been accessed; information about an order in which candidate cells have been accessed; first indication information for indicating that a first candidate cell is added or released; first time or number-of-times information for indicating a time when a second candidate cell is added or released; second indication information for indicating that an execution condition of a third candidate cell is updated; second time or number-of-times information for indicating a time when an execution condition of a fourth candidate cell is updated; information about updated execution condition; or third time information for indicating a duration from when the first configuration information is received by the terminal to when the first configuration information is released.

Information of each entry in the subsequent cell addition and/or change list information includes at least one of the following: identification information of a source cell; identification information of a target cell; a duration from when the source cell is accessed to when the target cell is accessed; measurement result information of the source cell and/or the target cell; measurement result information of each candidate cell; identification information of each candidate cell; execution condition configuration information for each candidate cell or execution condition list configuration information for each candidate cell; third indication information for indicating that a fifth candidate cell is added or released; fourth time or number-of-times information for indicating a time when a sixth candidate cell is added or released; fourth indication information for indicating that an execution condition of a seventh candidate cell is updated; fifth time or number-of-times information for indicating a time when an execution condition of an eighth candidate cell is updated; or information about updated execution condition.

In some embodiments, the steps further include: logging the first information in a target report; wherein the target report includes: a terminal mobility history information report, other existing report than the terminal mobility history information report, or a newly added report.

The logging the first information in the target report includes: logging the first information in the target report using a first manner; wherein the first manner includes any one of the following: logging the first information as a list including at least two entries, each entry corresponding to one serving cell; logging the first information integrally as one entry.

In some embodiments, the steps further include: receiving a first request message sent by the network device via the transceiver, wherein the first request message is used for requesting the terminal to report the first information; sending the first information to the network device includes: sending a first response message to the network device in response to the first request message; the first response message carries the first information.

In an embodiment of this disclosure, the steps further include: before receiving the first request message sent by the network device, sending fifth indication information to the network device through the transceiver; the fifth indication information is used for notifying the network device that the terminal stores the first information.

It should be noted that the device according to the embodiments of this disclosure can implement all the method steps implemented in the above terminal-side method embodiments and can achieve the same technical effect. Therefore, the parts and beneficial effects that are the same as those in the method embodiments will not be described in detail here.

An embodiment of this disclosure further provides an information transmission device, which is a network device, and as shown in Fig. 6, includes a memory 61, a transceiver 62, and a processor 63.

The memory 61 is used for storing a computer program; the transceiver 62 is used for sending and receiving data under the control of the processor 63; the processor 63 is used for reading the computer programs in the memory 61 and performing the following step:
receiving, via the transceiver 62, first information sent by the terminal; the first information is subsequent cell addition and/or change-related information; wherein, the first information includes at least one of the following: subsequent cell addition and/or change information, or subsequent cell addition and/or change list information.

According to the information transmission device provided in the embodiment of this disclosure, first information sent by a terminal is received; the first information is subsequent cell addition and/or change-related information; wherein, the first information includes at least one of the following: subsequent cell addition and/or change information, or subsequent cell addition and/or change list information; configuration optimization on the network side based on the first information can be supported, thereby reducing the number of times the first configuration information is updated, and thus supporting the reduction of interface interaction and signaling overhead caused by the update of the first configuration information, effectively solving the problem that related technologies cannot support solutions that reduce interface interaction and signaling overhead caused by subsequent cell addition and/or change.

Specifically, the transceiver 62 is used for receiving and sending data under the control of the processor 63.

In Fig. 6, the bus architecture may include any number of interconnected buses and bridges, specifically linking various circuits of one or more processors represented by processor 63 and memory represented by memory 61. The bus architecture may also link various other circuits such as peripheral devices, voltage regulators, and power management circuits, which are well known in the art and therefore will not be described further herein. The bus interface provides an interface. Transceiver 62 may be multiple elements, including a transmitter and a receiver, providing units for communicating with various other devices over transmission media, including wireless channels, wired channels, optical fibers, etc. Processor 63 is responsible for managing the bus architecture and general processing, and memory 61 may store data used by processor 63 during operation.

The processor 63 can be a central processing unit (CPU), an application-specific integrated circuit (ASIC), a field-programmable gate array (FPGA), or a complex programmable logic device (CPLD). The processor can also adopt a multicore architecture.

In an embodiment of this disclosure, the subsequent cell addition and/or change information includes at least one of the following: identification information of each candidate cell; execution condition configuration information for each candidate cell or execution condition list configuration information for each candidate cell; a number of times each candidate cell has been accessed; a duration for which each candidate cell has been accessed; information about an order in which candidate cells have been accessed; first indication information for indicating that a first candidate cell is added or released; first time or number-of-times information for indicating a time when a second candidate cell is added or released; second indication information for indicating that an execution condition of a third candidate cell is updated; second time or number-of-times information for indicating a time when an execution condition of a fourth candidate cell is updated; information about updated execution condition; or third time information for indicating a duration from when the first configuration information is received by the terminal to when the first configuration information is released, wherein the first configuration information is conditional configuration information for subsequent cell addition and/or change.

Information of each entry in the subsequent cell addition and/or change list information includes at least one of the following: identification information of a source cell; identification information of a target cell; a duration from when the source cell is accessed to when the target cell is accessed; measurement result information of the source cell and/or the target cell; measurement result information of each candidate cell; identification information of each candidate cell; execution condition configuration information for each candidate cell or execution condition list configuration information for each candidate cell; third indication information for indicating that a fifth candidate cell is added or released; fourth time or number-of-times information for indicating a time when a sixth candidate cell is added or released; fourth indication information for indicating that an execution condition of a seventh candidate cell is updated; fifth time or number-of-times information for indicating a time when an execution condition of an eighth candidate cell is updated; or information about updated execution condition.

In an embodiment of this disclosure, the first information is carried in a target report; wherein, the target report includes: a terminal mobility history information report, other existing report than the terminal mobility history information report, or a newly added report.

The first information is logged in the target report by the terminal using a first manner; wherein, the first manner includes any one of the following: logging the first information as a list including at least two entries, each entry corresponding to one serving cell; logging the first information integrally as one entry.

In some embodiments, the step further includes: sending a first request message to the terminal via the transceiver, wherein the first request message is used for requesting the terminal to report the first information; receiving the first information sent by the terminal includes: receiving a first response message sent by the terminal in response to the first request message; the first response message carries the first information.

In an embodiment of this disclosure, the step further includes: receiving, via the transceiver, fifth indication information sent by the terminal before sending the first request message to the terminal; the fifth indication information is used for notifying the network device that the terminal stores the first information.

In some embodiments, the step further includes: sending the first information to a target node via interface signaling by using the transceiver.

It should be noted that the device according to the embodiments of this disclosure can implement all the method steps implemented in the above network device side method embodiments and can achieve the same technical effect. Therefore, the parts and beneficial effects that are the same as those in the method embodiments will not be described in detail here.

An embodiment of this disclosure further provides an information transmission apparatus applied to a terminal. As shown in Fig. 7, the apparatus includes:
a first obtaining unit 71, configured to obtain first information in a case that the terminal is configured with first configuration information, the first configuration information being conditional configuration information for subsequent cell addition and/or change, the first information being subsequent cell addition and/or change-related information; and
a first sending unit 72, configured to send the first information to the network device; wherein the first information includes at least one of the following: subsequent cell addition and/or change information, or subsequent cell addition and/or change list information.

According to the information transmission apparatus provided in the embodiment of this disclosure, first information is obtained in a case that a terminal is configured with first configuration information, the first configuration information being conditional configuration information for subsequent cell addition and/or change, the first information being subsequent cell addition and/or change-related information; and the first information is sent to the network device; wherein the first information includes at least one of the following: subsequent cell addition and/or change information, or subsequent cell addition and/or change list information; configuration optimization on the network side based on the first information can be supported, thereby reducing the number of times the first configuration information is updated, and thus supporting the reduction of interface interaction and signaling overhead caused by the update of the first configuration information, effectively solving the problem that related technologies cannot support solutions that reduce interface interaction and signaling overhead caused by subsequent cell addition and/or change.

In an embodiment of this disclosure, the subsequent cell addition and/or change information includes at least one of the following: identification information of each candidate cell; execution condition configuration information for each candidate cell or execution condition list configuration information for each candidate cell; a number of times each candidate cell has been accessed; a duration for which each candidate cell has been accessed; information about an order in which candidate cells have been accessed; first indication information for indicating that a first candidate cell is added or released; first time or number-of-times information for indicating a time when a second candidate cell is added or released; second indication information for indicating that an execution condition of a third candidate cell is updated; second time or number-of-times information for indicating a time when an execution condition of a fourth candidate cell is updated; information about updated execution condition; or third time information for indicating a duration from when the first configuration information is received by the terminal to when the first configuration information is released.

Information of each entry in the subsequent cell addition and/or change list information includes at least one of the following: identification information of a source cell; identification information of a target cell; a duration from when the source cell is accessed to when the target cell is accessed; measurement result information of the source cell and/or the target cell; measurement result information of each candidate cell; identification information of each candidate cell; execution condition configuration information for each candidate cell or execution condition list configuration information for each candidate cell; third indication information for indicating that a fifth candidate cell is added or released; fourth time or number-of-times information for indicating a time when a sixth candidate cell is added or released; fourth indication information for indicating that an execution condition of a seventh candidate cell is updated; fifth time or number-of-times information for indicating a time when an execution condition of an eighth candidate cell is updated; or information about updated execution condition.

In some embodiments, the information transmission apparatus further includes: a first processing unit, configured to log the first information in a target report; wherein the target report includes: a terminal mobility history information report, other existing report than the terminal mobility history information report, or a newly added report.

The logging the first information in the target report includes: logging the first information in the target report using a first manner; wherein the first manner includes any one of the following: logging the first information as a list including at least two entries, each entry corresponding to one serving cell; logging the first information integrally as one entry.

In some embodiments, the information transmission apparatus further includes: a first receiving unit, configured to receive a first request message sent by the network device; the first request message is used for requesting the terminal to report the first information; the sending the first information to the network device includes: sending a first response message to the network device in response to the first request message; the first response message carries the first information.

In an embodiment of this disclosure, the information transmission apparatus further includes: a second sending unit, configured to send fifth indication information to the network device before receiving the first request message sent by the network device; the fifth indication information is used for notifying the network device that the terminal stores the first information.

It should be noted that the apparatus according to the embodiments of this disclosure can implement all the method steps implemented in the above terminal-side method embodiments and achieve the same technical effect. Therefore, the parts and beneficial effects that are the same as those in the method embodiments will not be described in detail here.

An embodiment of this disclosure further provides an information transmission apparatus applied to a network device. As shown in Fig. 8, the apparatus includes:
a second receiving unit 81, configured to receive first information sent by the terminal; the first information is subsequent cell addition and/or change-related information; wherein, the first information includes at least one of the following: subsequent cell addition and/or change information, or subsequent cell addition and/or change list information.

According to the information transmission apparatus provided in the embodiment of this disclosure, first information sent by a terminal is received; the first information is subsequent cell addition and/or change-related information; wherein, the first information includes at least one of the following: subsequent cell addition and/or change information, or subsequent cell addition and/or change list information; configuration optimization on the network side based on the first information can be supported, thereby reducing the number of times the first configuration information is updated, and thus supporting the reduction of interface interaction and signaling overhead caused by the update of the first configuration information, effectively solving the problem that related technologies cannot support solutions that reduce interface interaction and signaling overhead caused by subsequent cell addition and/or change.

In an embodiment of this disclosure, the subsequent cell addition and/or change information includes at least one of the following: identification information of each candidate cell; execution condition configuration information for each candidate cell or execution condition list configuration information for each candidate cell; a number of times each candidate cell has been accessed; a duration for which each candidate cell has been accessed; information about an order in which candidate cells have been accessed; first indication information for indicating that a first candidate cell is added or released; first time or number-of-times information for indicating a time when a second candidate cell is added or released; second indication information for indicating that an execution condition of a third candidate cell is updated; second time or number-of-times information for indicating a time when an execution condition of a fourth candidate cell is updated; information about updated execution condition; or third time information for indicating a duration from when the first configuration information is received by the terminal to when the first configuration information is released, wherein the first configuration information is conditional configuration information for subsequent cell addition and/or change.

Information of each entry in the subsequent cell addition and/or change list information includes at least one of the following: identification information of a source cell; identification information of a target cell; a duration from when the source cell is accessed to when the target cell is accessed; measurement result information of the source cell and/or the target cell; measurement result information of each candidate cell; identification information of each candidate cell; execution condition configuration information for each candidate cell or execution condition list configuration information for each candidate cell; third indication information for indicating that a fifth candidate cell is added or released; fourth time or number-of-times information for indicating a time when a sixth candidate cell is added or released; fourth indication information for indicating that an execution condition of a seventh candidate cell is updated; fifth time or number-of-times information for indicating a time when an execution condition of an eighth candidate cell is updated; or information about updated execution condition.

In an embodiment of this disclosure, the first information is carried in a target report; wherein, the target report includes: a terminal mobility history information report, other existing report than the terminal mobility history information report, or a newly added report.

The first information is logged in the target report by the terminal using a first manner; wherein, the first manner includes any one of the following: logging the first information as a list including at least two entries, each entry corresponding to one serving cell; logging the first information integrally as one entry.

In some embodiments, the information transmission apparatus further includes: a third sending unit, configured to send a first request message to the terminal; the first request message is used for requesting the terminal to report the first information; the receiving the first information sent by the terminal includes: receiving a first response message sent by the terminal in response to the first request message; the first response message carries the first information.

In an embodiment of this disclosure, the information transmission apparatus further includes: a third receiving unit, configured to receive fifth indication information sent by the terminal before sending the first request message to the terminal; the fifth indication information is used for notifying the network device that the terminal stores the first information.

In some embodiments, the information transmission apparatus further includes: a fourth sending unit, configured to send the first information to a target node via interface signaling.

It should be noted that the apparatus according to the embodiments of this disclosure can implement all the method steps implemented in the above network device side method embodiments and can achieve the same technical effects. Therefore, the parts and beneficial effects that are the same as those in the method embodiments will not be described in detail here.

It should be noted that the division of units in the embodiments of this disclosure is illustrative and only represents one logical functional division. In actual implementation, other division methods may be used. Furthermore, the functional units in the various embodiments of this disclosure can be integrated into one processing unit, or each unit can exist physically separately, or two or more units can be integrated into one unit. The integrated units described above can be implemented in hardware or as software functional units.

If the integrated unit is implemented as a software functional unit and sold or used as an independent product, it can be stored in a processor-readable storage medium. Based on this understanding, the technical solution of this disclosure, in essence, or the part that contributes to related technologies, or all or part of the technical solution, can be embodied in the form of a software product. This computer software product is stored in a storage medium and includes several instructions to cause a computer device (which may be a personal computer, server, or network device, etc.) or processor to execute all or part of the steps of the methods described in the various embodiments of this disclosure. The aforementioned storage medium includes various media capable of storing program code, such as USB flash drives, portable hard drives, read-only memory (ROM), random access memory (RAM), magnetic disks, or optical discs.

An embodiment of this disclosure further provides a non-transitory readable storage medium storing a computer program for causing a processor to execute the foregoing methods on the terminal side or network device side.

The non-transitory readable storage medium can be any available medium or data storage device that the processor can access, including but not limited to magnetic memory (such as floppy disks, hard disks, magnetic tapes, magneto-optical disks (MO), etc.), optical memory (such as compact discs (CDs), digital video discs (DVDs), Blu-ray discs (BD), high-definition versatile discs (HVD), etc.), and semiconductor memory (such as ROMs, erasable programmable read-only memory (EPROM), electrically erasable programmable read-only memory (EEPROM), non-volatile memory (NAND (Non-volatile Memory Device) FLASH), solid state drives (SSDs), etc.).

The embodiments of the methods on the terminal side or network device side described above are all applicable to the embodiments of the non-transitory readable storage medium and can achieve the same technical effect.

Those skilled in the art will understand that embodiments of this disclosure can be provided as methods, systems, or computer program products. Therefore, this disclosure can take the form of a completely hardware embodiment, a completely software embodiment, or an embodiment combining software and hardware aspects. Furthermore, this disclosure can take the form of a computer program product embodied on one or more computer-usable storage media (including, but not limited to, disk storage and optical storage) containing computer-usable program code.

This disclosure is described with reference to flowcharts and/or block diagrams of methods, apparatus (systems), and computer program products according to embodiments of this disclosure. It will be understood that each block of the flowcharts and/or block diagrams, and combinations of blocks in the flowcharts and/or block diagrams, can be implemented by computer-executable instructions. These computer-executable instructions can be provided to a processor of a general-purpose computer, special-purpose computer, embedded processor, or other programmable data processing device to produce a machine, such that the instructions, which are executed by the processor of the computer or other programmable data processing apparatus, create means for implementing the functions specified in one or more flowcharts and/or one or more block diagrams.

These processor-executable instructions may also be stored in a processor-readable memory that can instruct a computer or other programmable data processing device to operate in a particular manner, such that the instructions stored in the processor-readable memory produce an article of manufacture including instruction means that implement the functions specified in one or more flowcharts and/or one or more block diagrams.

These processor-executable instructions can also be loaded onto a computer or other programmable data processing apparatus to cause a series of operational steps to be performed on the computer or other programmable device to produce a computer-implemented process, such that the instructions, which are executed on the computer or other programmable device, provide steps for implementing the functions specified in one or more flowcharts and/or one or more block diagrams.

It should be noted that the above division of modules is merely a logical functional division. In actual implementation, they can be fully or partially integrated into a single physical entity, or they can be physically separated. Furthermore, these modules can be implemented entirely in software called by a processing element; they can be fully implemented in hardware; or some modules can be implemented by software called by a processing element, while others are implemented in hardware. For example, a module can be a standalone processing element, or it can be integrated into a chip in the aforementioned apparatus. Alternatively, the module can be stored as program codes in the memory of the aforementioned apparatus, and its function can be called and executed by a processing element of the apparatus. The implementation of other modules is similar. Moreover, these modules can be fully or partially integrated together, or they can be implemented independently. The processing element mentioned here can be an integrated circuit with signal processing capabilities. In the implementation process, each step of the above method or each of the above modules can be implemented through integrated logic circuits in the hardware of the processor element or through software instructions.

For example, each module, unit, subunit, or submodule can be one or more integrated circuits configured to implement the above methods, such as one or more application-specific integrated circuits (ASICs), one or more digital signal processors (DSPs), or one or more field-programmable gate arrays (FPGAs). As another example, when a module is implemented using a processing element invoking program codes, the processing element can be a general-purpose processor, such as a central processing unit (CPU) or other processor capable of invoking program codes. Furthermore, these modules can be integrated together, and implemented as a system-on-a-chip (SOC).

The terms "first", "second" and the like used in the specification and claims of this disclosure are used to distinguish similar objects and are not necessarily used to describe a specific order or sequence. It should be understood that such data can be interchanged where appropriate so that embodiments of this disclosure described herein may be implemented in orders other than those illustrated or described herein. Furthermore, the terms "including" and "having" and any variations thereof are intended to cover non-exclusive inclusion; for example, a process, method, system, product, or apparatus that includes a series of steps or units is not necessarily limited to those steps or units explicitly listed, but may include other steps or units not explicitly listed or inherent in such processes, methods, products, or apparatus. Additionally, the use of "and/or" in the specification and claims indicates at least one of the connected objects, for example, A and/or B and/or C indicating seven possibilities: A alone, B alone, C alone, both A and B, both B and C, both A and C, all of A, B and C. Similarly, the use of "at least one of A or B" in this specification and claims should be understood as "A alone, B alone, or both A and B."

Obviously, those skilled in the art can make various modifications and variations to this disclosure without departing from its spirit and scope. Therefore, if such modifications and variations fall within the scope of the claims of this disclosure and their equivalents, this disclosure is also intended to include such modifications and variations.

## Claims

1. An information transmission method, performed by a terminal, the method comprising:
in a case that the terminal is configured with first configuration information, obtaining first information, the first configuration information being conditional configuration information for subsequent cell addition and/or change, the first information being subsequent cell addition and/or change-related information; and
sending the first information to a network device;
wherein the first information comprises at least one of the following:
subsequent cell addition and/or change information; or
subsequent cell addition and/or change list information.

2. The information transmission method according to claim 1, wherein the subsequent cell addition and/or change information comprises at least one of the following:
identification information of each candidate cell;
execution condition configuration information for each candidate cell or execution condition list configuration information for each candidate cell;
a number of times each candidate cell has been accessed;
a duration for which each candidate cell has been accessed;
information about an order in which candidate cells have been accessed;
first indication information for indicating that a first candidate cell is added or released;
first time or number-of-times information for indicating a time when a second candidate cell is added or released;
second indication information for indicating that an execution condition of a third candidate cell is updated;
second time or number-of-times information for indicating a time when an execution condition of a fourth candidate cell is updated;
information about updated execution condition; or
third time information for indicating a duration from when the first configuration information is received by the terminal to when the first configuration information is released.

3. The information transmission method according to claim 1, wherein each entry in the subsequent cell addition and/or change list information comprises at least one of the following:
identification information of a source cell;
identification information of a target cell;
a duration from when the source cell is accessed to when the target cell is accessed;
measurement result information of the source cell and/or the target cell;
measurement result information of each candidate cell;
identification information of each candidate cell;
execution condition configuration information for each candidate cell or execution condition list configuration information for each candidate cell;
third indication information for indicating that a fifth candidate cell is added or released;
fourth time or number-of-times information for indicating a time when a sixth candidate cell is added or released;
fourth indication information for indicating that an execution condition of a seventh candidate cell is updated;
fifth time or number-of-times information for indicating a time when an execution condition of an eighth candidate cell is updated; or
information about updated execution condition.

4. The information transmission method according to claim 1, further comprising:
logging the first information in a target report;
wherein the target report comprises: a terminal mobility history information report, other existing report than the terminal mobility history information report, or a newly added report.

5. The information transmission method according to claim 4, wherein the logging the first information in the target report comprises:
logging the first information in the target report in a first manner;
wherein the first manner comprises any one of the following:
the first information is logged as a list comprising at least two entries, each entry corresponding to one serving cell;
the first information is logged integrally as one entry.

6. The information transmission method according to claim 1, further comprising:
receiving a first request message sent by the network device, wherein the first request message is used for requesting the terminal to report the first information;
the sending the first information to the network device comprises:
sending a first response message to the network device in response to the first request message, wherein the first response message carries the first information.

7. The information transmission method according to claim 6, wherein, before receiving the first request message sent by the network device, the method further comprises:
sending fifth indication information to the network device, wherein the fifth indication information is used for notifying the network device that the terminal stores the first information.

8. An information transmission method, performed by a network device, the method comprising:
receiving first information sent by a terminal, wherein the first information being subsequent cell addition and/or change-related information;
wherein the first information comprises at least one of the following:
subsequent cell addition and/or change information; or
subsequent cell addition and/or change list information.

9. The information transmission method according to claim 8, wherein the subsequent cell addition and/or change information comprises at least one of the following:
identification information of each candidate cell;
execution condition configuration information for each candidate cell or execution condition list configuration information for each candidate cell;
a number of times each candidate cell has been accessed;
a duration for which each candidate cell has been accessed;
information about an order in which candidate cells have been accessed;
first indication information for indicating that a first candidate cell is added or released;
first time or number-of-times information for indicating a time when a second candidate cell is added or released;
second indication information for indicating that an execution condition of a third candidate cell is updated;
second time or number-of-times information for indicating a time when an execution condition of a fourth candidate cell is updated;
information about updated execution condition; or
third time information for indicating a duration from when first configuration information is received by the terminal to when the first configuration information is released, wherein the first configuration information is conditional configuration information for subsequent cell addition and/or change.

10. The information transmission method according to claim 8, wherein each entry in the subsequent cell addition and/or change list information comprises at least one of the following:
identification information of a source cell;
identification information of a target cell;
a duration from when the source cell is accessed to when the target cell is accessed;
measurement result information of the source cell and/or the target cell;
measurement result information of each candidate cell;
identification information of each candidate cell;
execution condition configuration information for each candidate cell or execution condition list configuration information for each candidate cell;
third indication information for indicating that a fifth candidate cell is added or released;
fourth time or number-of-times information for indicating a time when a sixth candidate cell is added or released;
fourth indication information for indicating that an execution condition of a seventh candidate cell is updated;
fifth time or number-of-times information for indicating a time when an execution condition of an eighth candidate cell is updated; or
information about updated execution condition.

11. The information transmission method according to claim 8, wherein the first information is carried in a target report;
wherein the target report comprises: a terminal mobility history information report, other existing report than the terminal mobility history information report, or a newly added report.

12. The information transmission method according to claim 11, wherein the first information is logged in the target report by the terminal using a first manner;
wherein the first manner comprises any one of the following:
the first information is logged as a list comprising at least two entries, each entry corresponding to one serving cell;
the first information is logged integrally as one entry.

13. The information transmission method according to claim 8, further comprising:
sending a first request message to the terminal, wherein the first request message is used for requesting the terminal to report the first information;
the receiving the first information sent by the terminal comprises:
receiving a first response message sent by the terminal in response to the first request message, wherein the first response message carries the first information.

14. The information transmission method according to claim 13, wherein, before sending the first request message to the terminal, the method further comprises:
receiving fifth indication information sent by the terminal, wherein the fifth indication information is used for notifying the network device that the terminal stores the first information.

15. The information transmission method according to claim 8, further comprising:
sending the first information to a target node via interface signaling.

16. An information transmission device, wherein the information transmission device is a terminal, and the information transmission device comprises a memory, a transceiver, and a processor;
the memory is used for storing a computer program; the transceiver is used for sending and receiving data under the control of the processor; and the processor is used for reading the computer program from the memory and performing the following steps:
in a case that the terminal is configured with first configuration information, obtaining first information, the first configuration information being conditional configuration information for subsequent cell addition and/or change, the first information being subsequent cell addition and/or change-related information; and
sending the first information to the network device via the transceiver;
wherein the first information comprises at least one of the following:
subsequent cell addition and/or change information; or
subsequent cell addition and/or change list information.

17. The information transmission device according to claim 16, wherein the subsequent cell addition and/or change information comprises at least one of the following:
identification information of each candidate cell;
execution condition configuration information for each candidate cell or execution condition list configuration information for each candidate cell;
a number of times each candidate cell has been accessed;
a duration for which each candidate cell has been accessed;
information about an order in which candidate cells have been accessed;
first indication information for indicating that a first candidate cell is added or released;
first time or number-of-times information for indicating a time when a second candidate cell is added or released;
second indication information for indicating that an execution condition of a third candidate cell is updated;
second time or number-of-times information for indicating a time when an execution condition of a fourth candidate cell is updated;
information about updated execution condition; or
third time information for indicating a duration from when the first configuration information is received by the terminal to when the first configuration information is released.

18. The information transmission device according to claim 16, wherein each entry in the subsequent cell addition and/or change list information comprises at least one of the following:
identification information of a source cell;
identification information of a target cell;
a duration from when the source cell is accessed to when the target cell is accessed;
measurement result information of the source cell and/or the target cell;
measurement result information of each candidate cell;
identification information of each candidate cell;
execution condition configuration information for each candidate cell or execution condition list configuration information for each candidate cell;
third indication information for indicating that a fifth candidate cell is added or released;
fourth time or number-of-times information for indicating a time when a sixth candidate cell is added or released;
fourth indication information for indicating that an execution condition of a seventh candidate cell is updated;
fifth time or number-of-times information for indicating a time when an execution condition of an eighth candidate cell is updated; or
information about updated execution condition.

19. The information transmission device according to claim 16, wherein the steps further comprise:
logging the first information in a target report;
wherein the target report comprises: a terminal mobility history information report, other existing report than the terminal mobility history information report, or a newly added report.

20. The information transmission device according to claim 19, wherein the logging the first information in the target report comprises:
logging the first information in the target report in a first manner;
wherein the first manner comprises any one of the following:
the first information is logged as a list comprising at least two entries, each entry corresponding to one serving cell;
the first information is logged integrally as one entry.

21. The information transmission device according to claim 16, wherein the steps further comprise:
receiving, via the transceiver, a first request message sent by the network device, wherein the first request message is used for requesting the terminal to report the first information;
the sending the first information to the network device comprises:
sending a first response message to the network device in response to the first request message, wherein the first response message carries the first information.

22. The information transmission device according to claim 21, wherein the steps further comprise:
before receiving the first request message sent by the network device, sending fifth indication information to the network device via the transceiver; the fifth indication information is used for notifying the network device that the terminal stores the first information.

23. An information transmission device, wherein the information transmission device is a network device, and the information transmission device comprises a memory, a transceiver, and a processor;
the memory is used for storing a computer program; the transceiver is used for sending and receiving data under the control of the processor; and the processor is used for reading the computer program from the memory and performing the following step:
receiving, via the transceiver, first information sent by the terminal, the first information being subsequent cell addition and/or change-related information;
wherein the first information comprises at least one of the following:
subsequent cell addition and/or change information; or
subsequent cell addition and/or change list information.

24. The information transmission device according to claim 23, wherein the subsequent cell addition and/or change information comprises at least one of the following:
identification information of each candidate cell;
execution condition configuration information for each candidate cell or execution condition list configuration information for each candidate cell;
a number of times each candidate cell has been accessed;
a duration for which each candidate cell has been accessed;
information about an order in which candidate cells have been accessed;
first indication information for indicating that a first candidate cell is added or released;
first time or number-of-times information for indicating a time when a second candidate cell is added or released;
second indication information for indicating that an execution condition of a third candidate cell is updated;
second time or number-of-times information for indicating a time when an execution condition of a fourth candidate cell is updated;
information about updated execution condition; or
third time information for indicating a duration from when first configuration information is received by the terminal to when the first configuration information is released, wherein the first configuration information is conditional configuration information for subsequent cell addition and/or change.

25. The information transmission device according to claim 23, wherein each entry in the subsequent cell addition and/or change list information comprises at least one of the following:
identification information of a source cell;
identification information of a target cell;
a duration from when the source cell is accessed to when the target cell is accessed;
measurement result information of the source cell and/or the target cell;
measurement result information of each candidate cell;
identification information of each candidate cell;
execution condition configuration information for each candidate cell or execution condition list configuration information for each candidate cell;
third indication information for indicating that a fifth candidate cell is added or released;
fourth time or number-of-times information for indicating a time when a sixth candidate cell is added or released;
fourth indication information for indicating that an execution condition of a seventh candidate cell is updated;
fifth time or number-of-times information for indicating a time when an execution condition of an eighth candidate cell is updated; or
information about updated execution condition.

26. The information transmission device according to claim 23, wherein the first information is carried in a target report;
wherein the target report comprises: a terminal mobility history information report, other existing report than the terminal mobility history information report, or a newly added report.

27. The information transmission device according to claim 26, wherein the first information is logged in the target report by the terminal using a first manner;
wherein the first manner comprises any one of the following:
the first information is logged as a list comprising at least two entries, each entry corresponding to one serving cell;
the first information is logged integrally as one entry.

28. The information transmission device according to claim 23, wherein the step further comprises:
sending a first request message to the terminal via the transceiver, wherein the first request message is used for requesting the terminal to report the first information;
the receiving the first information sent by the terminal comprises:
receiving a first response message sent by the terminal in response to the first request message, wherein the first response message carries the first information.

29. The information transmission device according to claim 28, wherein the step further comprises:
before sending the first request message to the terminal, receiving, via the transceiver, fifth indication information sent by the terminal, wherein the fifth indication information is used for notifying the network device that the terminal stores the first information.

30. The information transmission device according to claim 23, wherein the step further comprises:
sending the first information to a target node via interface signaling by using the transceiver.

31. An information transmission apparatus applied to a terminal, the apparatus comprising:
a first obtaining unit, configured to obtain first information in a case that the terminal is configured with first configuration information, the first configuration information being conditional configuration information for subsequent cell addition and/or change, the first information being subsequent cell addition and/or change-related information; and
a first sending unit, configured to send the first information to a network device;
wherein the first information comprises at least one of the following:
subsequent cell addition and/or change information; or
subsequent cell addition and/or change list information.

32. The information transmission apparatus according to claim 31, wherein the subsequent cell addition and/or change information comprises at least one of the following:
identification information of each candidate cell;
execution condition configuration information for each candidate cell or execution condition list configuration information for each candidate cell;
a number of times each candidate cell has been accessed;
a duration for which each candidate cell has been accessed;
information about an order in which candidate cells have been accessed;
first indication information for indicating that a first candidate cell is added or released;
first time or number-of-times information for indicating a time when a second candidate cell is added or released;
second indication information for indicating that an execution condition of a third candidate cell is updated;
second time or number-of-times information for indicating a time when an execution condition of a fourth candidate cell is updated;
information about updated execution condition; or
third time information for indicating a duration from when the first configuration information is received by the terminal to when the first configuration information is released.

33. The information transmission apparatus according to claim 31, wherein each entry in the subsequent cell addition and/or change list information comprises at least one of the following:
identification information of a source cell;
identification information of a target cell;
a duration from when the source cell is accessed to when the target cell is accessed;
measurement result information of the source cell and/or the target cell;
measurement result information of each candidate cell;
identification information of each candidate cell;
execution condition configuration information for each candidate cell or execution condition list configuration information for each candidate cell;
third indication information for indicating that a fifth candidate cell is added or released;
fourth time or number-of-times information for indicating a time when a sixth candidate cell is added or released;
fourth indication information for indicating that an execution condition of a seventh candidate cell is updated;
fifth time or number-of-times information for indicating a time when an execution condition of an eighth candidate cell is updated; or
information about updated execution condition.

34. The information transmission apparatus according to claim 31, further comprising:
a first processing unit, configured to log the first information in a target report;
wherein the target report comprises: a terminal mobility history information report, other existing report than the terminal mobility history information report, or a newly added report.

35. The information transmission apparatus according to claim 34, wherein logging the first information in the target report comprises:
logging the first information in the target report in a first manner;
wherein the first manner comprises any one of the following:
the first information is logged as a list comprising at least two entries, each entry corresponding to one serving cell;
the first information is logged integrally as one entry.

36. The information transmission apparatus according to claim 31, further comprising:
a first receiving unit, configured to receive a first request message sent by the network device, wherein the first request message is used for requesting the terminal to report the first information;
sending the first information to the network device comprises:
sending a first response message to the network device in response to the first request message, wherein the first response message carries the first information.

37. The information transmission apparatus according to claim 36, further comprising:
a second sending unit, configured to send fifth indication information to the network device before receiving the first request message sent by the network device; wherein the fifth indication information is used for notifying the network device that the terminal stores the first information.

38. An information transmission apparatus applied to a network device, the apparatus comprising:
a second receiving unit, configured to receive first information sent by a terminal, wherein the first information is subsequent cell addition and/or change-related information;
wherein the first information comprises at least one of the following:
subsequent cell addition and/or change information; or
subsequent cell addition and/or change list information.

39. The information transmission apparatus according to claim 38, wherein the subsequent cell addition and/or change information comprises at least one of the following:
identification information of each candidate cell;
execution condition configuration information for each candidate cell or execution condition list configuration information for each candidate cell;
a number of times each candidate cell has been accessed;
a duration for which each candidate cell has been accessed;
information about an order in which candidate cells have been accessed;
first indication information for indicating that a first candidate cell is added or released;
first time or number-of-times information for indicating a time when a second candidate cell is added or released;
second indication information for indicating that an execution condition of a third candidate cell is updated;
second time or number-of-times information for indicating a time when an execution condition of a fourth candidate cell is updated;
information about updated execution condition; or
third time information for indicating a duration from when first configuration information is received by the terminal to when the first configuration information is released, wherein the first configuration information is conditional configuration information for subsequent cell addition and/or change.

40. The information transmission apparatus according to claim 38, wherein each entry in the subsequent cell addition and/or change list information comprises at least one of the following:
identification information of a source cell;
identification information of a target cell;
a duration from when the source cell is accessed to when the target cell is accessed;
measurement result information of the source cell and/or the target cell;
measurement result information of each candidate cell;
identification information of each candidate cell;
execution condition configuration information for each candidate cell or execution condition list configuration information for each candidate cell;
third indication information for indicating that a fifth candidate cell is added or released;
fourth time or number-of-times information for indicating a time when a sixth candidate cell is added or released;
fourth indication information for indicating that an execution condition of a seventh candidate cell is updated;
fifth time or number-of-times information for indicating a time when an execution condition of an eighth candidate cell is updated; or
information about updated execution condition.

41. The information transmission apparatus according to claim 38, wherein the first information is carried in a target report;
wherein the target report comprises: a terminal mobility history information report, other existing report than the terminal mobility history information report, or a newly added report.

42. The information transmission apparatus according to claim 41, wherein the first information is logged in the target report by the terminal using a first manner;
wherein the first manner comprises any one of the following:
the first information is logged as a list comprising at least two entries, each entry corresponding to one serving cell;
the first information is logged integrally as one entry.

43. The information transmission apparatus according to claim 38, further comprising:
a third sending unit, configured to send a first request message to the terminal, wherein the first request message is used for requesting the terminal to report the first information;
the receiving the first information sent by the terminal comprises:
receiving a first response message sent by the terminal in response to the first request message, wherein the first response message carries the first information.

44. The information transmission apparatus according to claim 43, further comprising:
a third receiving unit, configured to receive fifth indication information sent by the terminal before sending the first request message to the terminal; wherein the fifth indication information is used for notifying the network device that the terminal stores the first information.

45. The information transmission apparatus according to claim 38, further comprising:
a fourth sending unit, configured to send the first information to a target node via interface signaling.

46. A non-transitory readable storage medium, wherein the non-transitory readable storage medium stores a computer program for causing a processor to perform the method according to any one of claims 1 to 15.
